(19) **Europäisches Patentamt / European Patent Office / Office européen des brevets**

(11) **EP 4 297 363 A1**

(12) # EUROPEAN PATENT APPLICATION
published in accordance with Art. 153(4) EPC

(43) Date of publication:
**27.12.2023 Bulletin 2023/52**

(21) Application number: **21926793.7**

(22) Date of filing: **20.12.2021**

(51) International Patent Classification (IPC):
**H04L 43/0811** (2022.01)    **H04L 12/42** (2006.01)
**H04L 12/437** (2006.01)    **H04L 25/02** (2006.01)

(52) Cooperative Patent Classification (CPC):
**H04L 12/42; H04L 12/437; H04L 25/02;
H04L 43/0811**

(86) International application number:
**PCT/JP2021/046949**

(87) International publication number:
**WO 2022/176370 (25.08.2022 Gazette 2022/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.02.2021 JP 2021024540**

(71) Applicant: **Panasonic Intellectual Property
Management Co., Ltd.
Osaka-shi, Osaka 540-6207 (JP)**

(72) Inventors:
• **SAKAI, Hayata**
  **Osaka 571-0057 (JP)**
• **KYUHATA, Atsuki**
  **Osaka 571-0057 (JP)**
• **MISHIMA, Masashi**
  **Osaka 571-0057 (JP)**

(74) Representative: **SSM Sandmair
Patentanwälte Rechtsanwalt
Partnerschaft mbB
Joseph-Wild-Straße 20
81829 München (DE)**

(54) **COMMUNICATION SYSTEM, SLAVE, CONTROLLER, AND COMMUNICATION METHOD**

(57)    The time taken from an occurrence of an anomaly related to network connection to a change of a transmission path of a frame is shortened as compared with a conventional art. Communication system (1) includes controller (10) and a plurality of slaves (20) each including third input and output port (21) and fourth input and output port (22). Slave (20) includes detector (25) and slave transmission control part (23). Detector (25) detects an anomaly related to connection of third input and output port (21) and an anomaly related to connection of fourth input and output port (22). When detector (25) detects the anomaly, slave transmission control part (23) attempts to transmit a disconnection node notification frame indicating that a change in a connection state is detected from third input and output port (21) and fourth input and output port (22). The controller changes the transmission path of the normal frame in a case of receiving the disconnection node notification frame.

FIG. 1

EP 4 297 363 A1

**Description**

TECHNICAL FIELD

The present disclosure relates to a communication system.

BACKGROUND ART

PTL 1 describes a communication system where a controller and a plurality of slaves are connected in a ring shape. The communication system periodically transmits a network presence frame from the controller to the plurality of slaves by broadcast to check the connection state of the network. Then, the transmission path of the frame is changed based on the confirmation result.

Citation List

Patent Literature

PTL 1: WO2010/143305

SUMMARY OF THE INVENTION

In the above-described conventional communication system, the connection state of the network is checked only at the timing of transmitting the network presence frame. For this reason, it may take a long time to some extent until the transmission path of the frame is changed after an anomaly related to the network connection occurs.

Therefore, the present disclosure provides a communication system and the like that can reduce the time taken from the occurrence of an anomaly related to network connection to the change of the transmission path of a frame as compared with the conventional art.

A communication system according to one aspect of the present disclosure is a communication system including a controller and a first slave to an Nth slave (N is an integer equal to or greater than 2). The controller includes a first input and output port, a second input and output port, and a controller transmission control part. Each of the first slave to the Nth slave includes a third input and output port, a fourth input and output port, a slave transmission control part, and a detector. The first input and output port is connected to the fourth input and output port of the first slave. The third input and output port of the Nth slave is connected to the second input and output port. At any K (K is an integer equal to or greater than 2 and less than or equal to N), the third input and output port of the K-1th slave is connected to the fourth input and output port of the Kth slave. The controller transmission control part generates and transmits a normal frame, receives a disconnection node notification frame, and executes a first controller operation mode and a second controller operation mode. In the first controller operation mode, the normal frame is repeatedly transmitted from the first input and output port. In the second controller operation mode, the normal frame is repeatedly transmitted from the first input and output port and the second input and output port. The slave transmission control part transmits and receives the normal frame, generates the disconnection node notification frame, transmits and receives the disconnection node notification frame, and executes a first slave operation mode and a second slave operation mode. In the first slave operation mode, when one input and output port of the third input and output port and the fourth input and output port receives the normal frame, the normal frame is transmitted from an other input and output port of the third input and output port and the fourth input and output port. In the second slave operation mode, when the one input and output port receives the normal frame, the normal frame is transmitted from the one input and output port. The detector detects an anomaly related to connection of the third input and output port and an anomaly related to connection of the fourth input and output port. When the detector detects an anomaly related to connection of the third input and output port or an anomaly related to connection of the fourth input and output port during operation in the first slave operation mode, the slave transmission control part switches from the first slave operation mode to the second slave operation mode. Furthermore, the slave transmission control part generates the disconnection node notification frame indicating that a change in a connection state is detected, and attempts to transmit the disconnection node notification frame from the third input and output port and the fourth input and output port. At the same time, when the one input and output port receives the disconnection node notification frame, the slave transmission control part transmits the disconnection node notification frame from the other input and output port. When the first input and output port or the second input and output port receives the disconnection node notification frame during operation in the first controller operation mode, the controller transmission control part switches from the first controller operation mode to the second controller operation mode.

A slave according to another aspect of the present disclosure includes a first input and output port, a second input and output port, a slave transmission control part, and a detector. The slave transmission control part transmits and receives a normal frame, generates a disconnection node notification frame, transmits and receives the disconnection node notification frame, and executes a first slave operation mode and a second slave operation mode. The first slave operation mode is an operation mode where when one input and output port of the first input and output port and the second input and output port receives the normal frame, the normal frame is transmitted from an other input and output port of the first input and output port and the second input and output port. The second slave operation mode is an operation mode where when the one input and output port receives the normal frame, a normal frame based on the normal frame is transmitted from the one input and output port. The detector detects an anomaly related to connection of the first input and output port and an anomaly related to connection of the first input and output port. When the detector detects an anomaly related to connection of the first input and output port or an anomaly related to connection of the second input and output port during operation in the first slave operation mode, the slave transmission control part switches from the first slave operation mode to the second slave operation mode. Furthermore, the slave transmission control part attempts to transmit a disconnection node notification frame indicating that a change in a connection state is detected from the first input and output port and the second input and output port. At the same time, when the one input and output port receives the disconnection node notification frame, the slave transmission control part transmits the disconnection node notification frame from the other input and output port.

A controller according to another aspect of the present disclosure includes a first input and output port, a second input and output port, and a controller transmission control part. The controller transmission control part generates and transmits a normal frame, and executes a first controller operation mode and a second controller operation mode. The first controller operation mode is an operation mode where the normal frame is repeatedly transmitted from the first input and output port. The second controller operation mode is an operation mode where the normal frame is repeatedly transmitted from the first input and output port and the second input and output port. When the first input and output port or the second input and output port receives a disconnection node notification frame indicating a change in a connection state during operation in the first controller operation mode, the controller transmission control part switches from the first controller operation mode to the second controller operation mode.

A communication method according to another aspect of the present disclosure is a communication method performed by a communication system. The communication system includes a controller, and a first slave to an Nth slave (N is an integer equal to or greater than 2). The controller includes a first input and output port, a second input and output port, and a controller transmission control part. Each of the first slave to the Nth slave includes a third input and output port, a fourth input and output port, a slave transmission control part, and a detector. The first input and output port is connected to the fourth input and output port of the first slave. The third input and output port of the Nth slave is connected to the second input and output port. At any K (K is an integer equal to or greater than 2 and less than or equal to N), the third input and output port of the K-1th slave is connected to the fourth input and output port of the Kth slave. In the communication method, the controller transmission control part generates the normal frame, repeatedly transmits the normal frame from the first input and output port in the first controller operation mode, and repeatedly transmits the normal frame from the first input and output port and the second input and output port in the second controller operation mode. When one input and output port of the third input and output port and the fourth input and output port receives the normal frame in the first slave operation mode, the slave transmission control part of each of the first slave to the Nth slave transmits the normal frame from an other input and output port of the third input and output port and the fourth input and output port. Furthermore, when the one input and output port receives the normal frame in the second slave operation mode, the slave transmission control part transmits the normal frame from the one input and output port. The detector detects an anomaly related to connection of the third input and output port and an anomaly related to connection of the fourth input and output port. When the detector detects an anomaly related to connection of the third input and output port or an anomaly related to connection of the fourth input and output port during operation in the first slave operation mode, the slave transmission control part switches from the first slave operation mode to the second slave operation mode. At the same time, the slave transmission control part generates a disconnection node notification frame indicating that a change in a connection state is detected, and attempts to transmit the disconnection node notification frame from the third input and output port and the fourth input and output port. Then, when the one input and output port receives the disconnection node notification frame, the slave transmission control part transmits a disconnection node notification frame based on the disconnection node notification frame from the other input and output port. When the first input and output port or the second input and output port receives the disconnection node notification frame during operation in the first controller operation mode, the controller transmission control part switches from the first controller operation mode to the second controller operation mode.

According to the communication system, the slave, the controller, and the communication method according to the above aspect of the present disclosure, it is possible to shorten the time taken from the occurrence of the anomaly related to the network connection to the change of the transmission path of the frame as compared with the conventional art.

BRIEF DESCRIPTION OF THE DRAWINGS

Fig. 1 is a block diagram illustrating an example of a configuration of a communication system according to a first exemplary embodiment.

Fig. 2 is a block diagram illustrating an example of a configuration of a controller according to the first exemplary embodiment.

Fig. 3 is a block diagram illustrating an example of a configuration of a slave according to the first exemplary embodiment.

Fig. 4 is a schematic view illustrating a transmission path of a normal frame.

Fig. 5 is a timing chart illustrating a transmission and reception timing of the normal frame and an operation timing of a synchronization timing signal.

Fig. 6 is a schematic view illustrating a transmission path of the normal frame.

Fig. 7 is a timing chart illustrating a transmission and reception timing of the normal frame and an operation timing of the synchronization timing signal.

Fig. 8 is a schematic view illustrating a state where a cable disconnection anomaly occurs in a cable according to the first exemplary embodiment.

Fig. 9 is a sequence diagram of a first operation according to the first exemplary embodiment.

Fig. 10 is a schematic view illustrating a state where a PHY terminal anomaly occurs in the TX PHY terminal according to the first exemplary embodiment.

Fig. 11 is a sequence diagram of a second operation according to the first exemplary embodiment.

Fig. 12 is a schematic view illustrating a state where a PHY terminal anomaly occurs in the RX PHY terminal according to the first exemplary embodiment.

Fig. 13 is a sequence diagram of a third operation according to the first exemplary embodiment.

Fig. 14 is a schematic view illustrating a transmission path of the normal frame.

Fig. 15 is a schematic view illustrating a state where the cable disconnection anomaly of the cable is recovered according to the first exemplary embodiment.

Fig. 16 is a sequence diagram of a fourth operation according to the first exemplary embodiment.

Fig. 17 is a flowchart illustrating an operation of the slave according to the first exemplary embodiment.

Fig. 18 is a flowchart illustrating an operation of the slave according to the first exemplary embodiment.

Fig. 19 is a flowchart illustrating an operation of the controller according to the first exemplary embodiment.

Fig. 20 is a block diagram illustrating an example of a configuration of a controller according to a second exemplary embodiment.

Fig. 21 is a schematic view illustrating a state where replacement of slaves is performed according to second exemplary embodiment.

Fig. 22 is a schematic view illustrating a state where the slave is being removed according to the second exemplary embodiment.

Fig. 23 is a block diagram illustrating an example of a configuration of a communication system according to a third exemplary embodiment.

DESCRIPTION OF EMBODIMENT

(Background to obtain an aspect of the present disclosure)

The inventors have repeatedly conducted intensive studies and experiments on a method of shortening the time taken from the occurrence of an anomaly related to network connection to the change of the transmission path of a frame in a communication system where a controller and a plurality of slaves are connected in a ring shape as compared with a conventional method. As a result, the inventors have found that the controller can confirm occurrence of an anomaly in a relatively short time after the occurrence of the anomaly related to network connection, by each slave detecting an anomaly related to network connection and notifying the controller of the detected anomaly. Based on this finding, the inventors further conducted studies and experiments. As a result, the following communication system and the like have been conceived.

A communication system according to one aspect of the present disclosure is a communication system including a controller and a first slave to an Nth slave (N is an integer equal to or greater than 2). The controller includes a first input and output port, a second input and output port, and a controller transmission control part. Each of the first slave to the Nth slave includes a third input and output port, a fourth input and output port, a slave transmission control part, and a detector. The first input and output port is connected to the fourth input and output port of the first slave. The third input and output port of the Nth slave is connected to the second input and output port. At any K (K is an integer equal to or greater than 2 and less than or equal to N), the third input and output port of the K-1th slave is connected to the fourth input and output port of the Kth slave. The controller transmission control part generates and transmits a normal frame, receives a disconnection node notification frame, and executes a first controller operation mode and a second controller operation mode. In the first controller operation mode, the normal frame is repeatedly transmitted from the first input and output port. In the second controller operation mode, the normal frame is repeatedly transmitted from the first input and output port and the second input and output port. The slave transmission control part transmits and receives the normal frame, generates the disconnection node notification frame, transmits and receives the disconnection node notification frame, and executes a first slave operation mode and a second slave operation mode. In the first slave operation mode, when one input and output port of the third input and output port and the fourth input and output port receives the normal frame, the normal frame is transmitted from an other input and output port of the third input and output port and the fourth input and output port. In the second slave operation mode, when the one input and output port receives the normal frame, the normal frame is transmitted from the one input and output port. The detector detects an anomaly related to connection of the third input and output port and an anomaly related to connection of the fourth input and output port. When the detector detects an anomaly related to connection of the third input and output port or an anomaly related to connection of the fourth input and output port during operation in the first slave operation mode, the slave transmission control part switches from the first slave operation mode to the second slave operation mode. Furthermore, the slave transmission control part generates the disconnection node notification frame indicating that a change in a connection state is detected, and attempts to transmit the disconnection node notification frame from the third input and output port and the fourth input and output port. At the same time, when the one input and output port receives the disconnection node notification frame slave transmission control part transmits the disconnection node notification frame from the other input and output port. When the first input and output port or the second input and output port receives the disconnection node notification frame during operation in the first controller operation mode, the controller transmission control part switches from the first controller operation mode to the second controller operation mode.

In the communication system, when the controller transmission control part operates in the first controller operation mode, and the slave transmission control part of each slave operates in the first slave operation mode, the transmission path of the normal frame is a transmission path that returns from the controller to the controller through the first slave to the Nth slave in order.

In this state, when the detector detects an anomaly related to connection of the third input and output port or an anomaly related to connection of the fourth input and output port in any of the slaves, the disconnection node notification frame is transmitted from the relevant slave to the controller. As a result, the controller can receive the disconnection node notification frame in a relatively short time after the occurrence of the anomaly related to the network connection. When the controller receives the disconnection node notification frame, the controller transmission control part switches the operation mode from the first controller operation mode to the second controller operation mode.

On the other hand, in the slave where the detector detects an anomaly related to connection of the third input and output port or an anomaly related to connection of the fourth input and output port, the slave transmission control part switches the operation mode from the first slave operation mode to the second slave operation mode.

As a result, the communication path of the communication frame is changed to a transmission path including two paths of the first path and the second path.

(First path)

A path from the controller to the controller through the first slave to a slave before the position where an anomaly related to connection has occurred, to the first slave (that is, a path to be turned by a slave before the slave having the anomaly related to connection).

(Second path)

A path from the controller to the controller through the Nth slave to a slave before an anomaly related to connection occurs, to the Nth slave (that is, a path to be turned by a slave before the position where the anomaly related to connection has occurred).

As described above, according to the communication system including the above configuration, it is possible to shorten the time taken from the occurrence of the anomaly related to the network connection to the change of the transmission path of the frame as compared with the conventional art.

Further, the disconnection node notification frame may include the node count value indicating an integer value of equal to or greater than 0, and the slave transmission control part may have the following features (1) and (2) during operation in the first slave operation mode.

(1) When the detector detects an anomaly related to connection of the one input and output port, transmission of a disconnection node notification frame including the node count value indicating 0 from the one input and output port is attempted. Then, transmission of a disconnection node notification frame including the node count value indicating 1 from the other input and output port is attempted.

(2) When the one input and output port receives a disconnection node notification frame including the node count value indicating 0, the operation mode is switched from the first slave operation mode to the second slave operation mode. When the one input and output port receives a disconnection node notification frame, a disconnection node notification frame including a node count value obtained by adding one to the node count value included in the received disconnection node notification frame is transmitted from the other input and output port.

The controller may further include an anomaly position determination part that, when the first input and output port and the second input and output port receive a disconnection node notification frame, specifies an occurrence position of an anomaly based on the node count value included in the disconnection node notification frame received by the first input and output port and the node count value included in the disconnection node notification frame received by the second input and output port.

As a result, even though the occurred anomaly related to connection is an anomaly of a type that is detectable only by the detector of the slave on one side of the occurrence position, the slave transmission control part of the slave on an other side of the occurrence position can also switch the operation mode from the first slave operation mode to the second slave operation mode. Thus, the occurrence position of the anomaly can be determined.

In addition, each of the first slave to the Nth slave may further include a synchronization timing calculator that calculates a synchronization timing signal indicating a synchronization timing for the first slave to the Nth slave operating in synchronization based on a timing for the third input and output port or the fourth input and output port receiving a normal frame. The synchronization timing calculator, in a case where an input and output port at a side of receiving a normal frame receives a disconnection node notification frame, and in a case where the detector detects an anomaly related to connection of an input and output port at the side of receiving a normal frame, may update a calculation method for calculating the synchronization timing signal by not changing the synchronization timing when an other input and output port than the input and output port at the side of receiving the normal frame receives a normal frame.

As a result, even when the transmission path of the normal frame is changed, the first slave to the Nth slave can operate in synchronization.

The slave transmission control part may set a Media Access Control ID (MACID) of a slave including the slave transmission control part in the disconnection node notification frame to be a target of an attempt of transmission when the detector detects the anomaly related to connection of the third input and output port or the anomaly related to connection of the fourth input and output port during operation in the first slave operation mode. The controller may further include an anomaly type determination part that determines a type of an anomaly based on a MACID included in the disconnection node notification frame received by the first input and output port and a MACID included in the disconnection node notification frame received by the second input and output port when the first input and output port and the second input and output port receive the disconnection node notification frame.

As a result, the controller can perform determination related to the type of anomaly.

Further, the detector may further detect recovery of an anomaly related to connection of the third input and output port and recovery of an anomaly related to connection of the fourth input and output port. The slave transmission control part may switch the operation mode from the second slave operation mode to the first slave operation mode, and transmits the disconnection note notification frame from the third input and output port and the fourth input and output port when the detector detects recovery of the anomaly related to connection of the third input and output port or recovery of the anomaly related to connection of the fourth input and output port during operation in the second slave operation mode. The controller transmission control part may switch an operation mode from the second controller operation mode to the first controller operation mode when the first input and output port or the second input and output port receives the disconnection node notification frame during operation in the second controller operation mode.

As a result, when the anomaly related to connection is recovered, the transmission path can be returned to the original state.

A slave according to another aspect of the present disclosure includes a first input and output port, a second input and output port, a slave transmission control part, and a detector. When one input and output port of the first input and output port and the second input and output port receives a normal frame in the first slave operation mode, the slave transmission control part transmits the normal frame from an other input and output port of the first input and output port and the second input and output port. Further, when the one input and output port receives a normal frame in the second slave operation mode, the slave transmission control part transmits the normal frame from the one input and output port. The detector detects an anomaly related to connection of the first input and output port and an anomaly related to connection of the first input and output port. When the detector detects an anomaly related to connection of the first input and output port or an anomaly related to connection of the second input and output port during operation in the first slave operation mode, the slave transmission control part switches the operation mode from the first slave operation mode to the second slave operation mode. At the same time, the slave transmission control part generates the disconnection node notification frame indicating that a change in a connection state is detected, and attempts to transmit the disconnection node notification frame from the first input and output port and the second input and output port. When the one input and output port receives the disconnection node notification frame, the slave transmission control part transmits the disconnection node notification frame from the other input and output port.

The slave including the above configuration can transmit the disconnection node notification frame when the detector detects an anomaly related to connection of the first input and output port or an anomaly related to connection of the second input and output port. As a result, the controller can receive the disconnection node notification frame in a relatively short time after the occurrence of the anomaly related to the network connection. When the disconnection node notification frame is received, the controller can change the transmission path of the frame.

As described above, according to the slave including the above configuration, the time taken from the occurrence of the anomaly related to the network connection to the change of the transmission path of the frame can be shortened as compared with the conventional art.

Furthermore, in a case where the disconnection node notification frame includes the node count value indicating an integer value of equal to or greater than 0, and during operation in the first slave operation mode, the slave transmission control part may perform the operations of the following (1) and (2): 1) when the detector detects an anomaly related to connection of the first input and output port, attempting to transmit the disconnection node notification frame including the node count value indicating 0 from the one input and output port, and attempting to transmit the disconnection node notification frame including the node count value indicating 1 from the other input and output port; and 2) when the one input and output terminal receives a disconnection node notification frame including the node count value indicating 0, switching the operation mode from the first slave operation mode to the second slave operation mode. When the one input and output port receives a disconnection node notification frame, a disconnection node notification frame including a node count value obtained by adding one to the node count value included in the received disconnection node notification frame is transmitted from the other input and output port.

Furthermore, a synchronization timing calculator that calculates a synchronization timing signal indicating a synchronization timing based on a timing for the first input and output port or the second input and output port receiving a normal frame may be included. The synchronization timing calculator, in a case where an input and output port at a side of receiving a normal frame receives a disconnection node notification frame, and in a case where the detector detects an anomaly related to connection of an input and output port at the side of receiving a normal frame, may update a calculation method for calculating the synchronization timing signal by not changing the synchronization timing when an other input and output port than the input and output port at the side of receiving the normal frame receives a normal frame.

The slave transmission control part may set a Media Access Control ID (MACID) of a slave including the slave transmission control part in the disconnection node notification frame to be a target of an attempt of transmission when the detector detects the anomaly related to connection of the first input and output port or the anomaly related to connection of the second input and output port during operation in the first slave operation mode.

Furthermore, the detector may further detect recovery of an anomaly related to connection of the first input and output port and recovery of an anomaly related to connection of the second input and output port. When the detector detects recovery of the anomaly related to connection of the first input and output port or recovery of the anomaly related to connection of the second input and output port during operation in the second slave operation mode, the slave transmission control part may switch the operation mode from the second slave operation mode to the first slave operation mode. At the same time, the slave transmission control part may transmit a disconnection node notification frame from the first input and output port and the second input and output port.

A controller according to another aspect of the present disclosure includes a first input and output port, a second input and output port, and a controller transmission control part. The controller transmission control part generates a normal frame, repeatedly transmits the normal frame from the first input and output port in the first controller operation mode, and repeatedly transmits the normal frame from the first input and output port and the second input and output port in the second controller operation mode. When the first input and output port or the second input and output port receives a disconnection node notification frame indicating a change in a connection state during operation in the first controller operation mode, the controller transmission control part switches the operation mode from the first controller operation mode to the second controller operation mode.

The controller including the above configuration can change the communication path of the communication frame by receiving the disconnection note notification frame without transmitting a network presence frame as in the conventional technique.

Therefore, according to the controller, the time taken from the occurrence of the anomaly related to the network connection to the change of the transmission path of the frame can be shortened as compared with the conventional art.

In addition, the disconnection node notification frame may include a MACID. Furthermore, an anomaly type determination part that determines a type of an anomaly based on a MACID included in the disconnection node notification frame received by the first input and output port and a MACID included in the disconnection node notification frame received by the second input and output port when the first input and output port and the second input and output port disconnection node notification frame may be included.

Furthermore, when the first input and output port or the second input and output port receives a disconnection node notification frame during operation in the second controller operation mode, the operation mode may be switched from the second controller operation mode to the first controller operation mode.

A communication method according to another aspect of the present disclosure is a communication method performed by a communication system. The communication system includes a controller and a first slave to an Nth slave (N is an integer equal to or greater than 2). The controller includes a first input and output port, a second input and output port, and a controller transmission control part. Each of the first slave to the Nth slave includes a third input and output port, a fourth input and output port, a slave transmission control part, and a detector. The first input and output port is connected to the fourth input and output port of the first slave. The third input and output port of the Nth slave is connected to the second input and output port. At any K (K is an integer equal to or greater than 2 and less than or equal to N), the third input and output port of the K-1th slave is connected to the fourth input and output port of the Kth slave. In the communication method, the controller transmission control part generates a normal frame, repeatedly transmits the normal frame from the first input and output port in the first controller operation mode, and repeatedly transmits the normal frame from the first input and output port and the second input and output port in the second controller operation mode. When one input and output port of the third input and output port and the fourth input and output port receives a normal frame in the first slave operation mode, the slave transmission control part of each of the first slave to the Nth slave transmits the normal frame from an other input and output port of the third input and output port and the fourth input and output port. Furthermore, when the one input and output port receives a normal frame in the second slave operation mode, the slave transmission control part transmits the normal frame from the one input and output port. The detector detects an anomaly related to connection of the third input and output port and an anomaly related to connection of the fourth input and output port. When the detector detects an anomaly related to connection of the third input and output port or an anomaly related to connection of the fourth input and output port during operation in the first slave operation mode, the slave transmission control part switches from the first slave operation mode to the second slave operation mode. At the same time, the slave transmission control part generates a disconnection node notification frame indicating that a change in a connection state is detected, and attempts to transmit the disconnection node notification frame from the third input and output port and the fourth input and output port. When the one input and output port receives the disconnection node notification frame, the slave transmission control part transmits the disconnection node notification frame from the other input and output port. When the first input and output port or the second input and output port receives a disconnection node notification frame during operation in the first controller operation mode, the controller transmission control part switches from the first controller operation mode to the second controller operation mode.

In the communication method, when the controller transmission control part operates in the first controller operation mode, and the slave transmission control part of each slave operates in the first slave operation mode, the transmission path of the normal frame is a transmission path that returns from the controller to the controller through the first slave to the Nth slave in order.

In this state, when the detector detects an anomaly related to connection of the third input and output port or an anomaly related to connection of the fourth input and output port in any of the slaves, the disconnection node notification frame is transmitted from the relevant slave to the controller. As a result, the controller can receive the disconnection node notification frame in a relatively short time after the occurrence of the anomaly related to the network connection. When the controller receives the disconnection node notification frame, the controller transmission control part switches the operation mode from the first controller operation mode to the second controller operation mode.

On the other hand, the slave transmission control part switches the operation mode from the first slave operation mode to the second slave operation mode with respect to the slave where the detector detects the anomaly related to connection of the third input and output port or the anomaly related to connection of the fourth input and output port.

As a result, the communication path of the communication frame is changed to a transmission path including two paths of the first path and the second path described below. The first path is a path from the controller to the controller through the first slave to a slave before the position where an anomaly related to connection has occurred, to the first slave (that is, a path to be turned by a slave before the slave having the anomaly related to connection). The second path is a path from the controller to the controller through the Nth slave to a slave before an anomaly related to connection occurs, to the Nth slave (that is, a path to be turned by a slave before the position where the anomaly related to connection has occurred).

As described above, according to the communication method, the time taken from the occurrence of the anomaly related to the network connection to the change of the transmission path of the frame can be shortened as compared with the conventional art.

Hereinafter, specific examples of a communication system, a slave, a controller, and a communication method according to one aspect of the present disclosure will be described with reference to the drawings. Exemplary embodiments to be described herein each illustrate a specific example of the present disclosure. Therefore, numerical values, shapes, structural elements, arrangement positions and connection modes of the structural elements, steps, order of the steps, and the like illustrated in the exemplary embodiments below are merely examples, and thus are not intended to limit the present disclosure. Each of the drawings is a schematic view, and is not necessarily precisely illustrated.

Comprehensive or specific aspects of the present disclosure may be achieved by a system, a method, an integrated circuit, a computer program, or a recording medium such as a computer-readable CD-ROM, or may be achieved by any combination of the system, the method, the integrated circuit, the computer program, and the recording medium.

(First exemplary embodiment)

[1-1. Configuration]

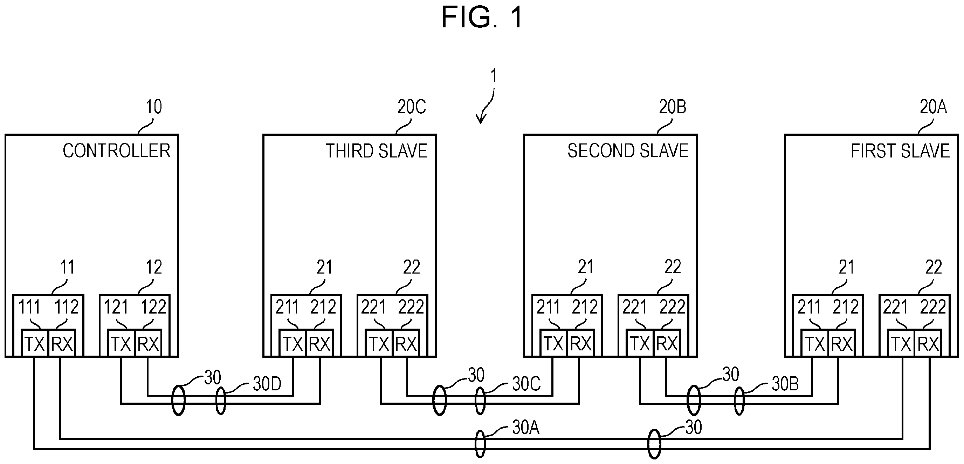

Fig. 1 is a block diagram illustrating an example of a configuration of communication system 1 according to a first exemplary embodiment.

As illustrated in Fig. 1, communication system 1 includes controller 10 including first input and output port 11 and second input and output port 12, and a plurality of slaves 20 (correspond to first slave 20A, second slave 20B, and third slave 20C in Fig. 1) each including third input and output port 21 and fourth input and output port 22.

Here, a description will be given on the assumption that the plurality of slaves 20 are three of first slave 20A, second slave 20B, and third slave 20C, but the number of the plurality of slaves 20 is not necessarily limited to three. In addition, hereinafter, when there is no need to explicitly distinguish first slave 20A, second slave 20B, and third slave 20C, first slave 20A, second slave 20B, and third slave 20C are also simply referred to as slave 20.

As illustrated in Fig. 1, first input and output port 11 and fourth input and output port 22 in first slave 20A are connected by cable 30A. Third input and output port 21 in first slave 20A and fourth input and output port 22 in second slave 20B are connected by cable 30B. Third input and output port 21 in second slave 20B and fourth input and output port 22 in third slave 20C are connected by cable 30C. Third input and output port 21 of third slave 20C and second input and output port 12 are connected by cable 30D. Hereinafter, when there is no need to explicitly distinguish cable 30A, cable 30B, cable 30C, and cable 30D, cable 30A, cable 30B, cable 30C, and cable 30D are also simply referred to as cable 30.

First input and output port 11 has transmission terminal TX111 and reception terminal RX112. Second input and output port 12 has transmission terminal TX121 and reception terminal RX122. Third input and output port 21 has transmission terminal TX211 and reception terminal RX212. Fourth input and output port 22 has transmission terminal TX221 and reception terminal RX222.

Cable 30 has a first connection path and a second connection path. The first connection path connects transmission terminal TX111 and reception terminal RX222, transmission terminal TX121 and reception terminal RX212, or transmission terminal TX221 and reception terminal RX212. The second connection path connects transmission terminal TX221 and reception terminal RX112, transmission terminal TX211 and reception terminal RX122, or transmission terminal TX211 and reception terminal RX222.

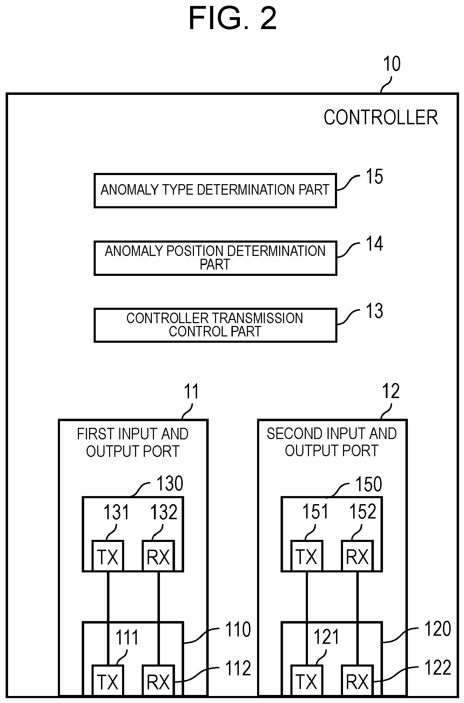

Fig. 2 is a block diagram illustrating an example of a configuration of controller 10.

As illustrated in Fig. 2, controller 10 includes first input and output port 11, second input and output port 12, controller transmission control part 13, anomaly position determination part 14, and anomaly type determination part 15.

First input and output port 11 includes connector 110 including transmission terminal TX111 and reception terminal RX112, and PHY 130.

PHY 130 includes TX PHY terminal 131 and RX PHY terminal 132, transmits a frame from TX PHY terminal 131 to a communication device of a connection destination, and receives a frame from the communication device of the connection destination at RX PHY terminal 132. TX PHY terminal 131 is connected to transmission terminal TX111, and RX PHY terminal 132 is connected to reception terminal RX112.

In addition, PHY 130 detects a link between RX PHY terminal 132 and the communication device of the connection destination.

Second input and output port 12 includes connector 120 including transmission terminal TX121 and reception terminal RX122, and PHY 150.

PHY 150 includes TX PHY terminal 151 and RX PHY terminal 152, transmits a frame from TX PHY terminal 151 to a communication device of a connection destination, and receives a frame from the communication device of the connection destination at RX PHY terminal 152. TX PHY terminal 151 is connected to transmission terminal TX121, and RX PHY terminal 152 is connected to reception terminal RX122.

In addition, PHY 150 detects a link between RX PHY terminal 152 and the communication device of the connection destination.

Controller transmission control part 13 operates in the first controller operation mode or the second controller operation mode. Controller transmission control part 13 operates in the first controller operation mode in the initial state.

In the first controller operation mode, controller transmission control part 13 repeatedly transmits the normal frame from first input and output port 11. More specifically, in the first controller operation mode, controller transmission control part 13 controls PHY 130 to repeatedly transmit the normal frame from TX PHY terminal 131 to a communication device of a connection destination.

For example, controller transmission control part 13 may transmit the normal frame from first input and output port 11 at predetermined intervals in the first controller operation mode.

In the second controller operation mode, controller transmission control part 13 repeatedly transmits the normal frame from first input and output port 11 and second input and output port 12. Specifically, in the second controller operation mode, controller transmission control part 13 controls PHY 130 and PHY 150 to repeatedly transmit the normal frame from TX PHY terminal 131 and TX PHY terminal 151 to communication devices of corresponding connection destinations.

For example, controller transmission control part 13 may transmit the normal frame from first input and output port 11 and second input and output port 12 at predetermined intervals in the second controller operation mode.

When first input and output port 11 or second input and output port 12 receives a disconnection node notification frame (described later) during operation in the first controller operation mode, controller transmission control part 13 switches the operation mode from the first controller operation mode to the second controller operation mode.

When first input and output port 11 or second input and output port 12 receives the disconnection node notification frame during operation in the second controller operation mode, controller transmission control part 13 switches the operation mode from the second controller operation mode to the first controller operation mode.

Controller transmission control part 13 may be implemented, for example, by processor 101 included in controller 10 executing a program stored in memory 102 included in controller 10.

When first input and output port 11 and second input and output port 12 receive the disconnection node notification frame, anomaly position determination part 14 determines an occurrence position of an anomaly based on the node count value indicating an integer value of equal to or greater than 0 included in the disconnection node notification frame. The operation performed by anomaly position determination part 14 will be described in detail later.

Anomaly position determination part 14 may be implemented, for example, by processor 101 included in controller 10 executing a program stored in memory 102 included in controller 10.

When first input and output port 11 and second input and output port 12 receive the disconnection node notification frame, anomaly type determination part 15 determines a type of an anomaly based on a MACID of slave 20 included in the disconnection node notification frame. The operation performed by anomaly type determination part 15 will be described in detail later.

Anomaly type determination part 15 may be implemented, for example, by processor 101 included in controller 10 executing a program stored in memory 102 included in controller 10.

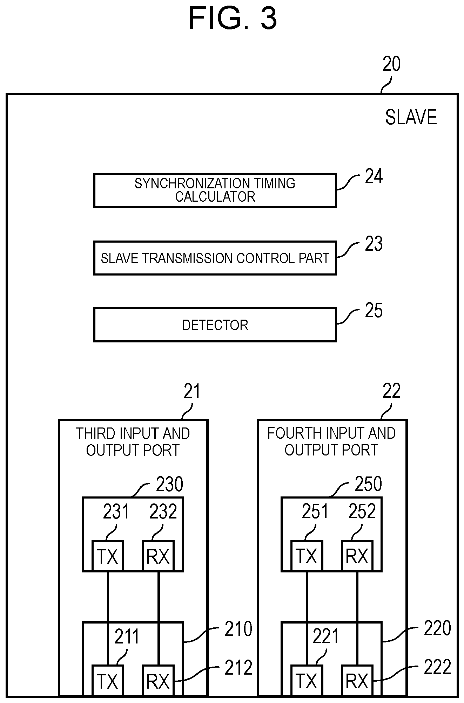

Fig. 3 is a block diagram illustrating an example of a configuration of slave 20.

As illustrated in Fig. 3, slave 20 includes third input and output port 21, fourth input and output port 22, slave transmission control part 23, synchronization timing calculator 24, and detector 25.

Third input and output port 21 includes connector 210 including transmission terminal TX211 and reception terminal RX212, and PHY 230.

PHY 230 includes TX PHY terminal 231 and RX PHY terminal 232, transmits a frame from TX PHY terminal 231 to a communication device of a connection destination, and receives a frame from a communication device of a connection destination at RX PHY terminal 232. TX PHY terminal 231 is connected to transmission terminal TX211, and RX PHY terminal 232 is connected to reception terminal RX212.

In addition, PHY 230 detects a link between RX PHY terminal 232 and the communication device of the connection destination.

Fourth input and output port 22 includes connector 220 including transmission terminal TX221 and reception terminal RX222, and PHY 250.

PHY 250 includes TX PHY terminal 251 and RX PHY terminal 252, transmits a frame from TX PHY terminal 251 to a communication device of a connection destination, and receives a frame from a communication device of a connection destination at RX PHY terminal 252. TX PHY terminal 251 is connected to transmission terminal TX221, and RX PHY terminal 252 is connected to reception terminal RX222.

In addition, PHY 250 detects a link between RX PHY terminal 252 and the communication device of the connection destination.

Detector 25 detects an anomaly related to connection of third input and output port 21 and an anomaly related to connection of fourth input and output port 22. More specifically, detector 25 detects the anomaly related to connection of third input and output port 21 when PHY 230 changes from a state where the link between RX PHY terminal 232 and the communication device of the connection destination is detected to a state where the link is not detected, and detects the anomaly related to connection of fourth input and output port 22 when PHY 250 changes from a state where the link between RX PHY terminal 252 and the communication device of the connection destination is detected to a state where the link is not detected.

In addition, detector 25 detects recovery of the anomaly related to connection of third input and output port 21 and recovery of the anomaly related to connection of fourth input and output port 22. More specifically, detector 25 detects the recovery of the anomaly related to connection of third input and output port 21 when PHY 230 changes from the state where the link between RX PHY terminal 232 and the communication device of the connection destination is not detected to the state where the link is detected, and detects the recovery of the anomaly related to connection of fourth input and output port 22 when PHY 250 changes from a state where the link between RX PHY terminal 252 and the communication device of the connection destination is not detected to the state where the link is detected.

Detector 25 may be implemented, for example, by processor 201 included in slave 20 executing a program stored in memory 202 included in slave 20.

Slave transmission control part 23 operates in the first slave operation mode or the second slave operation mode. Slave transmission control part 23 operates in the first slave operation mode in the initial state.

When one input and output port of third input and output port 21 and fourth input and output port 22 receives the normal frame in the first slave operation mode, slave transmission control part 23 transmits the normal frame from an other input and output port of third input and output port 21 and fourth input and output port 22. More specifically, slave transmission control part 23, in the first slave operation mode, controls PHY 230 and PHY 250 to transmit the normal frame from TX PHY terminal 251 when RX PHY terminal 232 receives the normal frame, and to transmit the normal frame from TX PHY terminal 231 when RX PHY terminal 252 receives the normal frame. The normal frame transmitted by the other input and output port is a normal frame obtained by controlling PHY 230 and PHY 250 with respect to the normal frame received by the one input and output port. As the normal frame, for example, the received normal frame may become the normal frame to be transmitted as it is under the control of PHY 230 and PHY 250, that is, the normal frame may become through. Furthermore, as the normal frame, for example, the received normal frame may be converted into the normal frame to be transmitted under the control of PHY 230 and PHY 250.

When one input and output port of third input and output port 21 and fourth input and output port 22 receives the normal frame in the second slave operation mode, slave transmission control part 23 transmits the normal frame from the one input and output port. More specifically, slave transmission control part 23, in the second slave operation mode, controls PHY 230 and PHY 250 to transmit the normal frame from TX PHY terminal 231 when RX PHY terminal 232 receives the normal frame, and to transmit the normal frame from TX PHY terminal 251 when RX PHY terminal 252 receives the normal frame.

When detector 25 detects the anomaly related to connection of third input and output port 21 or the anomaly related to connection of fourth input and output port 22 during operation in the first slave operation mode, slave transmission control part 23 switches the operation mode from the first slave operation mode to the second slave operation mode. At the same time, slave transmission control part 23 attempts to transmit a disconnection node notification frame indicating that a change in the connection state is detected from third input and output port 21 and fourth input and output port 22. More specifically, slave transmission control part 23 controls PHY 230 and PHY 250 to attempt to transmit the disconnection node notification frame from TX PHY terminal 231 and to attempt to transmit the disconnection note notification frame from TX PHY terminal 251.

At this time, slave transmission control part 23 sets a MACID of slave 20 including slave transmission control part 23 in the disconnection node notification frame to be a target of an attempt of transmission. In addition, at this time, when detector 25 detects the anomaly related to connection of one input and output port of third input and output port 21 and fourth input and output port 22, slave transmission control part 23 attempts to transmit a disconnection node notification frame including the node count value indicating 0 from the one input and output port and attempts to transmit a disconnection node notification frame including the node count value indicating 1 from an other input and output port.

When detector 25 detects recovery of the anomaly related to connection of third input and output port 21 or recovery of the anomaly related to connection of fourth input and output port 22 during operation in the second slave operation mode, slave transmission control part 23 switches the operation mode from the second slave operation mode to the first slave operation mode, and transmits the disconnection node notification frame from third input and output port 21 and fourth input and output port 22. More specifically, slave transmission control part 23 controls PHY 230 and PHY 250 to transmit the disconnection node notification frame from TX PHY terminal 231 and to transmit the disconnection note notification frame from TX PHY terminal 251.

At this time, slave transmission control part 23 sets a MACID of slave 20 including slave transmission control part 23 in the disconnection node notification frame to be a target of an attempt of transmission. In addition, at this time, when detector 25 detects recovery of the anomaly related to connection of one input and output port of third input and output port 21 and fourth input and output port 22, slave transmission control part 23 transmits a disconnection node notification frame including the node count value indicating 0 from the one input and output port and transmits a disconnection node notification frame including the node count value indicating 1 from an other input and output port.

When one input and output port of third input and output port 21 and fourth input and output port 22 receives the disconnection node notification frame, slave transmission control part 23 transmits the disconnection node notification frame from an other input and output port. More specifically, slave transmission control part 23 controls PHY 230 and PHY 250 to transmit the disconnection node notification frame from TX PHY terminal 251 when RX PHY terminal 232 receives the disconnection node notification frame, and to transmit the disconnection node notification frame from TX PHY terminal 231 when RX PHY terminal 252 receives the disconnection node notification frame. The disconnection node notification frame transmitted by the other input and output port is a disconnection node notification frame obtained by controlling PHY 230 and PHY 250 with respect to the disconnection node notification frame received by the one input and output port. As the disconnection node notification frame, for example, the received disconnection node notification frame may become the disconnection node notification frame to be transmitted as it is under the control of PHY 230 and PHY 250, that is, the disconnection node notification frame may become through. As the disconnection node notification frame, for example, the received disconnection node notification frame may be converted to be the disconnection node notification frame to be transmitted under the control of PHY 230 and PHY 250.

At this time, slave transmission control part 23 transmits, a disconnection node notification frame including a node count value obtained by adding one to the node count value included in the disconnection node notification frame received by one input and output port from an other input and output port.

When third input and output port 21 or fourth input and output port 22 receives the disconnection node notification frame including the node count value indicating 0 during operation in the first slave operation mode, slave transmission control part 23 switches the operation mode from the first slave operation mode to the second slave operation mode.

When third input and output port 21 or fourth input and output port 22 receives the disconnection node notification frame including the node count value including 0 during operation in the second slave operation mode, slave transmission control part 23 switches the operation mode from the second slave operation mode to the first slave operation mode.

Slave transmission control part 23 may be implemented, for example, by processor 201 included in slave 20 executing a program stored in memory 202 included in slave 20.

Synchronization timing calculator 24 calculates a synchronization timing signal indicating a synchronization timing for all of the plurality of slaves 20 operating in synchronization based on a timing for third input and output port 21 or fourth input and output port 22 receiving the normal frame.

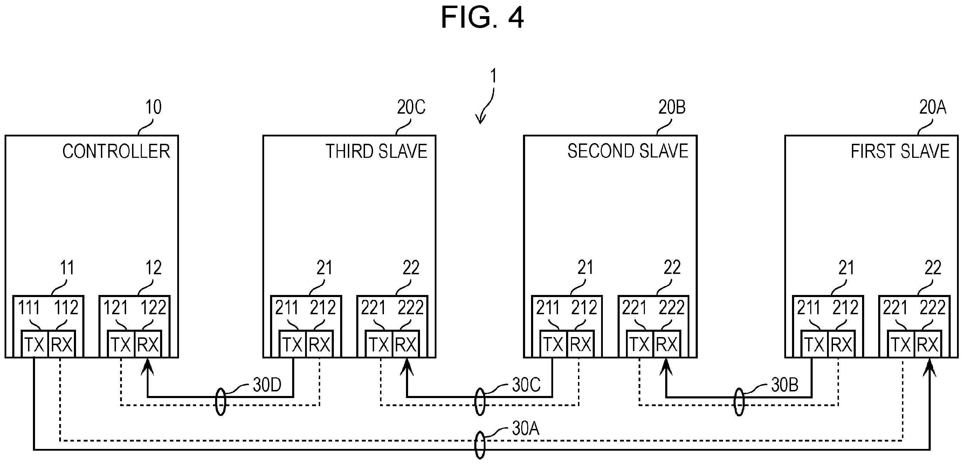

Fig. 4 is a schematic view illustrating a transmission path (hereinafter, also referred to as "main transmission path") of a normal frame when controller transmission control part 13 operates in the first controller operation mode, and slave transmission control parts 23 of first slave 20A, second slave 20B, and third slave 20C operate in the first slave operation mode. This main transmission path is the transmission path of the normal frame where controller transmission control part 13 and slave transmission control part 23 are in the initial state.

In Fig. 4, the main transmission path is a path indicated by a solid arrow.

As illustrated in Fig. 4, the main transmission path is a transmission path that returns from controller 10 to controller 10 through first slave 20A, second slave 20B, and third slave 20C in order.

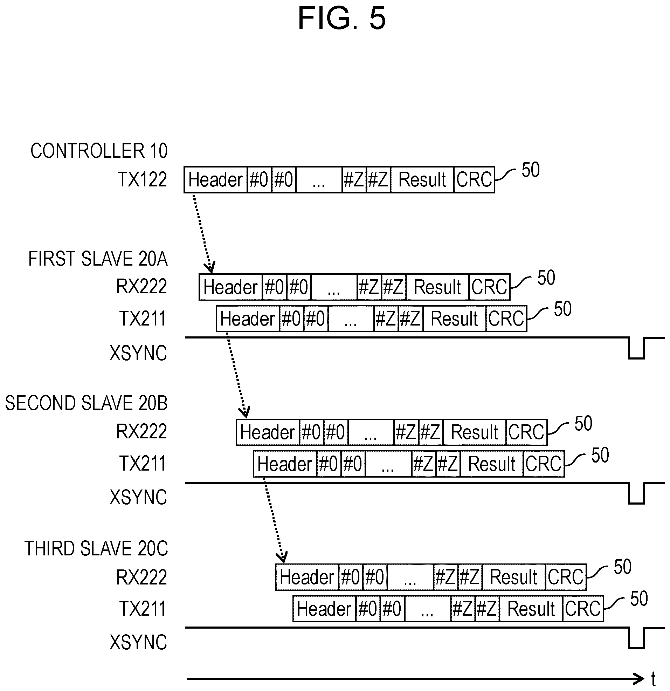

Fig. 5 is a timing chart illustrating an example of the transmission and reception timing of normal frame 50 and the operation timing of the synchronization timing signal XSYNC calculated by synchronization timing calculator 24 of each slave 20 in controller 10 and each slave 20 in a case where the transmission path of normal frame 50 is the main transmission path. In Fig. 5, the horizontal axis represents time t.

As illustrated in Fig. 5, synchronization timing calculator 24 of each slave 20 calculates the synchronization timing signal XSYNC for the slaves operating in synchronization.

Here, synchronization timing calculator 24 stores in advance the number of slaves 20 (here, three) and the connection order from controller 10 (here, 1 for first slave 20A, 2 for second slave 20B, and 3 for third slave 20C) on the main transmission path, and calculates the pulse timing T of the synchronization timing signal XSYNC by (Equation 1).

$$T = \text{normal frame reception completion time} + (\text{number of all slaves } 20 -$$

$$\text{connection order in transmission path}) \times \text{fixed delay value (Equation 1)}$$

Here, the "connection order in transmission path" in (Equation 1) is the connection order from controller 10 in the main transmission path stored in advance by synchronization timing calculator 24.

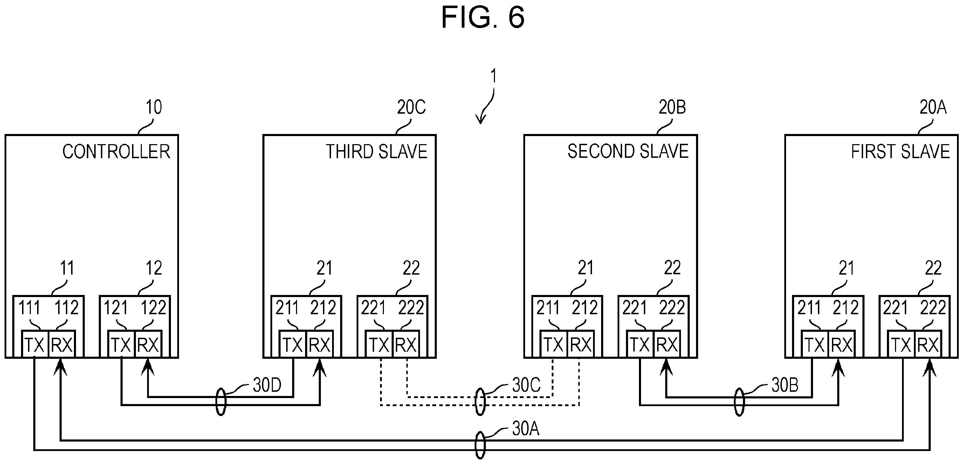

Fig. 6 is a schematic view illustrating a transmission path (hereinafter, also referred to as "first redundant transmission path") of a normal frame when controller transmission control part 13 operates in the second controller operation mode, slave transmission control part 23 of first slave 20A operates in the first slave operation mode, and slave transmission control parts 23 of second slave 20B and third slave 20C operate in the second slave operation mode. Although details will be described later, the first redundant transmission path is a transmission path formed by changing from the main transmission path, for example, in a case where the transmission path of the normal frame is the main transmission path, when detector 25 of second slave 20B detects an anomaly related to connection of third input and output port 21, and when detector 25 of third slave 20C detects an anomaly related to connection of fourth input and output port 22.

In Fig. 6, the first redundant transmission path is a path indicated by a solid arrow.

As shown in Fig. 6, the first redundant transmission path includes a first transmission path and a second transmission path. The first transmission path is a transmission path that returns from controller 10 to controller 10 through first slave 20A, second slave 20B, and first slave 20A in order, that is, a path turned by second slave 20B. The second transmission path is a transmission path that returns from controller 10 to controller 10 through third slave 20C, that is, a path turned by third slave 20C.

As illustrated in Fig. 6, the connection order of first slave 20A and second slave 20B from controller 10 on the first redundant transmission path is not changed from the connection order on the main transmission path. On the other hand, the connection order of third slave 20C from controller 10 on the first redundant transmission path is changed (here, changed from 3 to 1) from the connection order on the main transmission path.

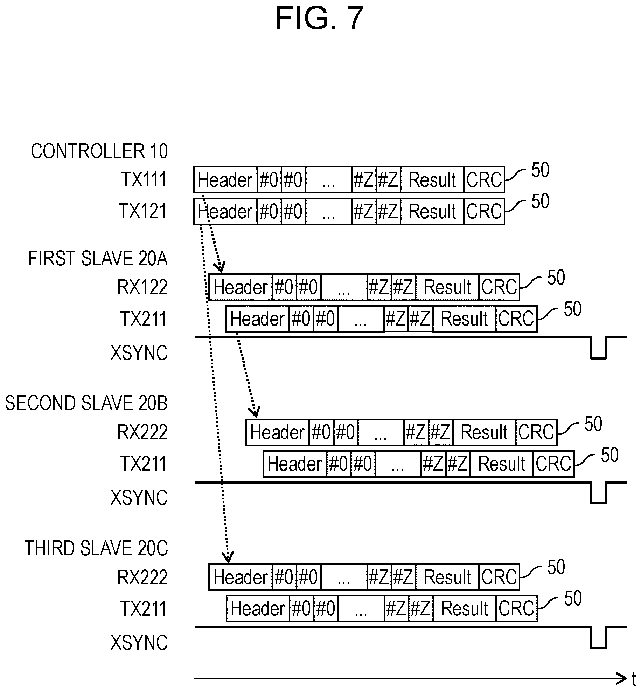

Fig. 7 is a timing chart illustrating an example of the transmission and reception timing of normal frame 50 and the operation timing of the synchronization timing signal XSYNC calculated by synchronization timing calculator 24 of each slave 20 in controller 10 and each slave 20 in a case where the transmission path of normal frame 50 is the first redundant transmission path. In Fig. 7, the horizontal axis represents time t.

In first slave 20A and second slave 20B, even when the transmission path is changed from the main transmission path to the first redundant transmission path, "the connection order in transmission path" in (Equation 1) is not changed. Therefore, in first slave 20A and second slave 20B, even when the transmission path is changed from the main transmission path to the first redundant transmission path, the method of calculating the pulse timing T of the synchronization timing signal XSYNC is not changed.

On one hand, in third slave 20C, when the transmission path is changed from the main transmission path to the first redundant transmission path, "connection order in transmission path" in (Equation 1) is changed.

On the other hand, when the connection order in the transmission path is changed, synchronization timing calculator 24 calculates the "connection order in transmission path" based on the node count value included in the disconnection node notification frame. As a result, even when the "connection order in transmission path" is changed, synchronization timing calculator 24 does not change the pulse timing T of the synchronization timing signal XSYNC. As described above, synchronization timing calculator 24 updates the method of calculating the pulse timing T of the synchronization timing signal XSYNC by not changing the pulse timing T of the synchronization timing signal XSYNC even when the "connection order in transmission path" is changed. Therefore, in third slave 20C, even when the transmission path is changed from the main transmission path to the first redundant transmission path, the pulse timing T of the synchronization timing signal XSYNC is not changed. The calculation of the "connection order in transmission path" performed by synchronization timing calculator 24 when the "connection order in transmission path" is changed will be described later.

The synchronization timing calculator 24 may be implemented, for example, by processor 201 included in slave 20 executing a program stored in memory 202 included in slave 20.

[1-2. Operation]

An operation performed by communication system 1 including the above configuration will be described below using a specific example.

First, an operation (hereinafter, also referred to as "first operation") performed by communication system 1 when a cable disconnection anomaly where cable 30 is disconnected occurs in cable 30C, in a case where the transmission path of the normal frame is the main transmission path will be described. Note that, here, the cable disconnection anomaly refers not only to an anomaly where the cable is disconnected, but also to an anomaly where communication via the cable is disabled due to, for example, the cable being detached from the connector.

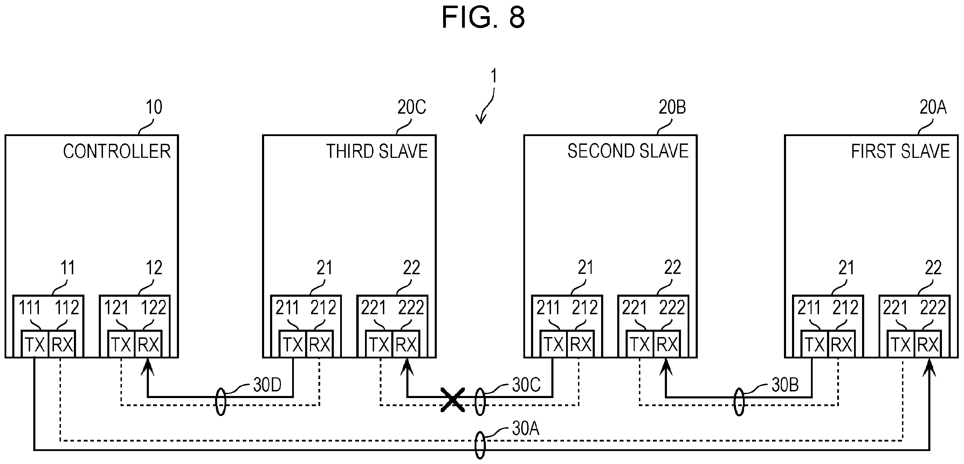

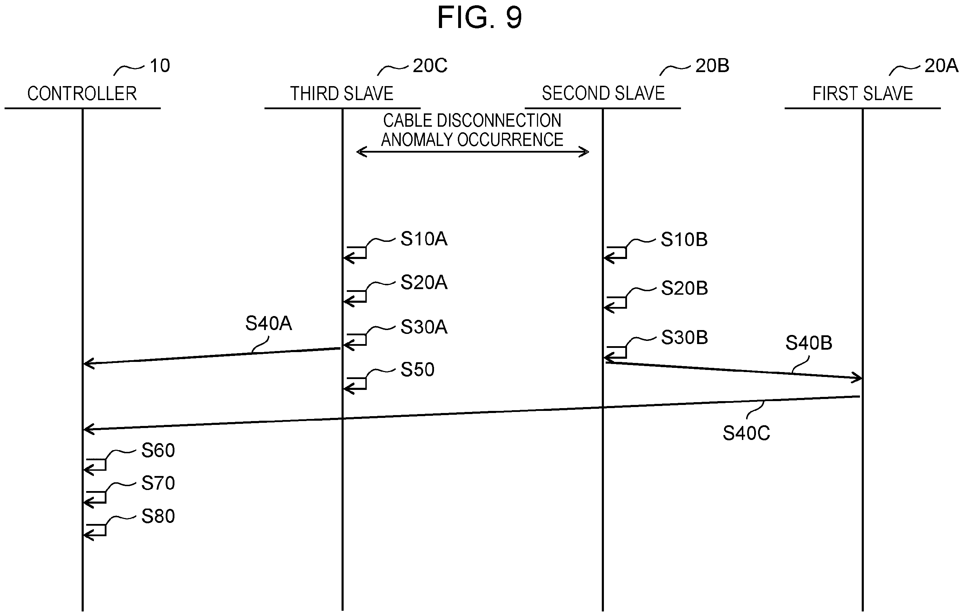

Fig. 8 is a schematic view illustrating a state where a cable disconnection anomaly where cable 30 is disconnected occurs in cable 30C. Fig. 9 is a sequence diagram of the first operation.

As illustrated in Fig. 9, when the cable disconnection anomaly occurs in cable 30C, in third slave 20C, PHY 250 no longer detects the link between RX PHY terminal 252 and TX PHY terminal 231 of PHY 230 of second slave 20B of a connection destination. Therefore, in third slave 20C, detector 25 of third slave 20C detects an anomaly related to connection of fourth input and output port 22 (step S10A).

When detector 25 of third slave 20C detects the anomaly related to connection of fourth input and output port 22, slave transmission control part 23 of third slave 20C switches the operation mode from the first slave operation mode to the second slave operation mode (step S20A).

Then, slave transmission control part 23 of third slave 20C attempts to transmit a disconnection node notification frame indicating that a change in the connection state is detected from third input and output port 21 and fourth input and output port 22 (step S30A).

At this time, slave transmission control part 23 of third slave 20C sets a MACID of third slave 20C including slave transmission control part 23 in the disconnection node notification frame to be a target of an attempt of transmission. In addition, slave transmission control part 23 of third slave 20C attempts to transmit a disconnection node notification frame including the node count value indicating 1 from third input and output port 21, and attempts to transmit a disconnection node notification frame including the node count value indicating 0 from fourth input and output port 22.

As described above, the cable disconnection anomaly occurs in cable 30C. Therefore, the attempt to transmit the disconnection node notification frame from fourth input and output port 22 fails. On the other hand, the attempt to transmit the disconnection node notification frame from third input and output port 21 is successful. That is, slave transmission control part 23 of third slave 20C transmits the disconnection node notification frame from third input and output port 21 (step S40A).

Here, when detector 25 of third slave 20C detects the anomaly related to connection of fourth input and output port 22, the transmission path of the normal frame is the main transmission path. Further, as will be described later, due to occurrence of cable disconnection anomaly in cable 30C, the transmission path of the normal frame is changed from the main transmission path to the first redundant transmission path. Therefore, in third slave 20C, the connection order of third slave 20C from controller 10 in the transmission path of the normal frame is changed (here, changed from 3 to 1).

The synchronization timing calculator 24 calculates "connection order in transmission path" in (Equation 1) by not changing the pulse timing T of the synchronization timing signal XSYNC even when the transmission path of the normal frame is changed from the main transmission path to the first redundant transmission path. Specifically, synchronization timing calculator 24 calculates a value (here, 3 - 3 + 1 = 1) obtained by adding one to a value obtained by subtracting the connection order from controller 10 (here, the connection order from controller 10 on the main transmission path stored in advance (here, 3)) at the time point of detector 25 detecting the anomaly related to connection from the number of slaves 20 stored in advance (here, 3) as "connection order in transmission path" in (Expression 1).

As described above, synchronization timing calculator 24 updates the method of calculating the pulse timing T of the synchronization timing signal XSYNC by not changing the pulse timing T of the synchronization timing signal XSYNC even when the "connection order in transmission path" is changed (step S50). In other words, when detector 25 detects the anomaly related to connection of the input and output port on the side receiving the normal frame, synchronization timing calculator 24 updates the calculation method for calculating the synchronization timing signal XSYNC by not changing the synchronization timing for all the plurality of slaves 20 operating in synchronization when an input and output port other than the input and output port receives the normal frame next time and thereafter.

On the other hand, when the cable disconnection anomaly occurs in cable 30C, in second slave 20B, PHY 230 no longer detects the link between RX PHY terminal 232 and TX PHY terminal 251 of PHY 250 of third slave 20C of a connection destination. Therefore, in second slave 20B, detector 25 of second slave 20B detects the anomaly related to connection of third input and output port 21 (step S10B).

When detector 25 of second slave 20B detects the anomaly related to connection of third input and output port 21, slave transmission control part 23 of second slave 20B switches the operation mode from the first slave operation mode to the second slave operation mode (step S20B).

Then, slave transmission control part 23 of second slave 20B attempts to transmit the disconnection node notification frame from third input and output port 21 and fourth input and output port 22 (step S30B).

At this time, slave transmission control part 23 of second slave 20B sets a MACID of second slave 20B including slave transmission control part 23 in the disconnection node notification frame to be a target of an attempt of transmission. In addition, slave transmission control part 23 of second slave 20B attempts to transmit a disconnection node notification frame including the node count value indicating 0 from third input and output port 21, and attempts to transmit a disconnection node notification frame including the node count value indicating 1 from fourth input and output port 22.

As described above, the cable disconnection anomaly occurs in cable 30C. Therefore, the attempt to transmit the disconnection node notification frame from third input and output port 21 fails. On the other hand, the attempt to transmit the disconnection node notification frame from fourth input and output port 22 is successful. That is, slave transmission control part 23 of second slave 20B transmits the disconnection node notification frame from fourth input and output port 22 (step S40B).

Here, when detector 25 of second slave 20B detects the anomaly related to connection of third input and output port 21, the transmission path of the normal frame is the main transmission path. Further, as will be described later, due to occurrence of cable disconnection anomaly in cable 30C, the transmission path of the normal frame is changed from the main transmission path to the first redundant transmission path. Therefore, in second slave 20B, the connection order of third slave 20C from controller 10 in the transmission path of the normal frame is not changed. Therefore, synchronization timing calculator 24 of second slave 20B does not update the method of calculating the pulse timing T of the synchronization timing signal XSYNC.

In the processing of step S40B, when slave transmission control part 23 of second slave 20B transmits the disconnection node notification frame from fourth input and output port 22, third input and output port 21 of first slave 20A receives the disconnection node notification frame.

When third input and output port 21 of first slave 20A receives the disconnection node notification frame, slave transmission control part 23 of first slave 20A transmits, from fourth input and output port 22, a disconnection node notification frame including the node count value (here, 1 + 1 = 2) obtained by adding one to the node count value (here, 1) included in the disconnection node notification frame (step S40C).

In the processing of step S40A, when slave transmission control part 23 of third slave 20C transmits the disconnection node notification frame (hereinafter, also referred to as "first disconnection node notification frame") from third input and output port 21, second input and output port 12 receives the first disconnection node notification frame.

In the processing of step S40C, when slave transmission control part 23 of first slave 20A transmits the disconnection node notification frame (hereinafter, also referred to as "second disconnection node notification frame") from fourth input and output port 22, first input and output port 11 receives the second disconnection node notification frame.

When second input and output port 12 receives the first disconnection node notification frame and first input and output port 11 receives the second disconnection node notification frame, anomaly type determination part 15 determines that the anomaly that has occurred in communication system 1 is the cable disconnection anomaly based on the MACID (here, MACID of third slave 20C) included in the first disconnection node notification frame and the MACID (here, MACID of second slave 20B) included in the second disconnection node notification frame (step S60).

That is, in a case where first input and output port 11 and second input and output port 12 receive the disconnection node notification frame within a predetermined time, when the MACIDs included in the disconnection node notification frames are different from each other, anomaly type determination part 15 determines that the anomaly that has occurred in communication system 1 is the cable disconnection anomaly.

Further, anomaly type determination part 15 determines that the occurrence position of the cable disconnection anomaly is between third slave 20C and second slave 20B based on the MACID (here, MACID of third slave 20C) included in the first disconnection node notification frame and the MACID (here, MACID of second slave 20B) included in the second disconnection node notification frame (step S70).

That is, in a case where first input and output port 11 and second input and output port 12 receive the disconnection node notification frame within a predetermined time, when the MACIDs included in the disconnection node notification frames are different from each other, anomaly type determination part 15 determines that the occurrence position of the anomaly having occurred in communication system 1 is between the slaves 20 indicated by the MACIDs.

When anomaly type determination part 15 determines the occurrence position of the anomaly, controller transmission control part 13 switches the operation mode from the first controller operation mode to the second controller operation mode (step S80).

By the first operation performed by communication system 1, the operation mode of controller transmission control part 13 is changed from the first controller operation mode to the second controller operation mode. In addition, by the first operation performed by communication system 1, the operation mode of slave transmission control part 23 of third slave 20C is changed from the first slave operation mode to the second slave operation mode. In addition, by the first operation performed by communication system 1, the operation mode of slave transmission control part 23 of second slave 20B is changed from the first slave operation mode to the second slave operation mode. As a result, the transmission path of the normal frame is changed from the main communication path (see Fig. 4) to the first redundant transmission path (see Fig. 6).

As described above, in a case where the transmission path of the normal frame is the main transmission path, when the cable disconnection anomaly occurs in cable 30, communication system 1 changes the transmission path to a transmission path not using cable 30 where the cable disconnection anomaly has occurred, and transmits the normal frame to each slave 20.

Next, an operation (hereinafter, also referred to as "second operation") performed by communication system 1 when a PHY terminal anomaly where TX PHY terminal 231 of second slave 20B stops functioning occurs in a case where the transmission path of the normal frame is the main transmission path will be described.

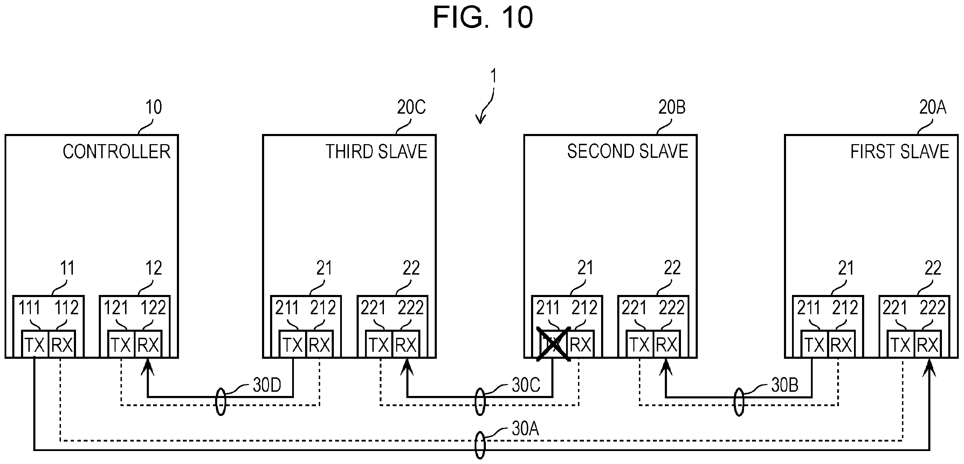

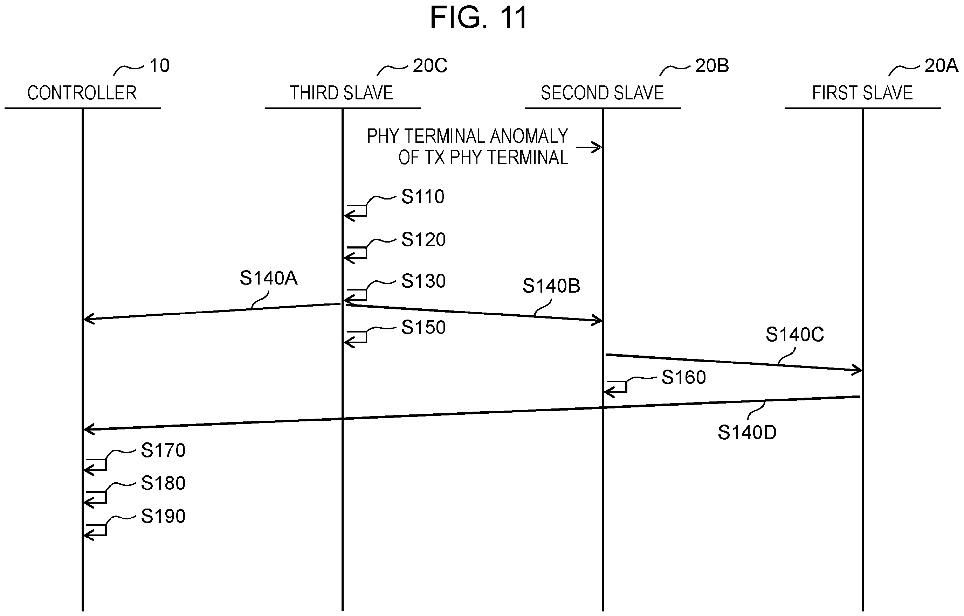

Fig. 10 is a schematic view illustrating a state where the PHY terminal anomaly where TX PHY terminal 231 stops functioning occurs in TX PHY terminal 231 of second slave 20B. Fig. 11 is a sequence diagram of the second operation. Note that here, the PHY terminal anomaly where the TX PHY terminal stops functioning refers to an anomaly where the TX PHY terminal stops functioning due to, for example, a failure of PHY or a failure occurring in a connection path of the TX PHY terminal.

As illustrated in Fig. 11, when a PHY terminal anomaly where TX PHY terminal 231 of second slave 20B stops functioning occurs in TX PHY terminal 231 of second slave 20B, in third slave 20C, PHY 250 no longer detects the link between RX PHY terminal 252 and TX PHY terminal 231 of PHY 230 of second slave 20B of a connection destination. Therefore, in third slave 20C, detector 25 of third slave 20C detects an anomaly related to connection of fourth input and output port 22 (step S110).

When detector 25 of third slave 20C detects the anomaly related to connection of fourth input and output port 22, slave transmission control part 23 of third slave 20C switches the operation mode from the first slave operation mode to the second slave operation mode (step S120).

Then, slave transmission control part 23 of third slave 20C attempts to transmit the disconnection node notification frame from third input and output port 21 and fourth input and output port 22 (step S130).

At this time, slave transmission control part 23 of third slave 20C sets a MACID of third slave 20C including slave transmission control part 23 in the disconnection node notification frame to be a target of an attempt of transmission. In addition, slave transmission control part 23 of third slave 20C attempts to transmit a disconnection node notification frame including the node count value indicating 1 from third input and output port 21, and attempts to transmit a disconnection node notification frame including the node count value indicating 0 from fourth input and output port 22.

As described above, the PHY terminal anomaly where TX PHY terminal 231 of second slave 20B stops functioning occurs in TX PHY terminal 231 of second slave 20B. However, it is possible to transmit a signal from TX PHY terminal 251 of third slave 20C to RX PHY terminal 232 of second slave 20B. Therefore, the attempt to transmit the disconnection node notification frame from fourth input and output port 22 is successful. That is, slave transmission control part 23 of third slave 20C transmits the disconnection node notification frame from fourth input and output port 22 (step S140B). On the other hand, the attempt to transmit the disconnection node notification frame from third input and output port 21 is also successful. That is, slave transmission control part 23 of third slave 20C transmits the disconnection node notification frame from third input and output port 21 (step S140A).

Here, when detector 25 of third slave 20C detects the anomaly related to connection of fourth input and output port 22, the transmission path of the normal frame is the main transmission path. Further, as will be described later, due to occurrence of PHY terminal anomaly where TX PHY terminal 231 of second slave 20B stops functioning in TX PHY terminal 231 of second slave 20B, the transmission path of the normal frame is changed from the main transmission path to the first redundant transmission path. Therefore, in third slave 20C, the connection order of third slave 20C from controller 10 in the transmission path of the normal frame is changed (here, changed from 3 to 1).

Therefore, synchronization timing calculator 24 updates the method of calculating the pulse timing T of the synchronization timing signal XSYNC by not changing the pulse timing T of the synchronization timing signal XSYNC even when the "connection order in transmission path" is changed (step S150).

On the other hand, even when a PHY terminal anomaly where TX PHY terminal 231 of second slave 20B stops functioning occurs in TX PHY terminal 231 of second slave 20B, PHY 230 in second slave 20B detects the link between RX PHY terminal 232 and TX PHY terminal 251 of PHY 250 of third slave 20C of a connection destination. Therefore, in second slave 20B, detector 25 of second slave 20B does not detect the anomaly related to connection of third input and output port 21.

In the processing of step S140B, when slave transmission control part 23 of third slave 20C transmits a disconnection node notification frame from fourth input and output port 22, third input and output port 21 of second slave 20B receives the disconnection node notification frame.

When third input and output port 21 of second slave 20B receives the disconnection node notification frame, slave transmission control part 23 of second slave 20B transmits, from fourth input and output port 22, a disconnection node notification frame including the node count value (here, 0 + 1 = 1) obtained by adding one to the node count value (here, 0) included in the disconnection node notification frame (step S140C).

Here, in response to receiving the disconnection node notification frame including the node count value indicating 0, slave transmission control part 23 of second slave 20B switches the operation mode from the first slave operation mode to the second slave operation mode (step S160).

In the processing of step S140C, when slave transmission control part 23 of second slave 20B transmits a disconnection node notification frame at fourth input and output port 22, third input and output port 21 of first slave 20A receives the disconnection node notification frame.

When third input and output port 21 of first slave 20A receives the disconnection node notification frame, slave transmission control part 23 of first slave 20A transmits, from fourth input and output port 22, a disconnection node notification frame including the node count value (here, 1 + 1 = 2) obtained by adding one to the node count value (here, 1) included in the disconnection node notification frame (step S140D).

In the processing of step S140A, when slave transmission control part 23 of third slave 20C transmits the disconnection node notification frame (hereinafter, also referred to as "third disconnection node notification frame") from third input and output port 21, second input and output port 12 receives the third disconnection node notification frame.

In the processing of step S140D, when slave transmission control part 23 of first slave 20A transmits a disconnection node notification frame (hereinafter, also referred to as "fourth disconnection node notification frame") from fourth input and output port 22, first input and output port 11 receives the fourth disconnection node notification frame.

When second input and output port 12 receives the third disconnection node notification frame, and first input and output port 11 receives the fourth disconnection node notification frame, anomaly type determination part 15 determines that the anomaly that has occurred in communication system 1 is a PHY terminal anomaly based on the MACID (here, MACID of third slave 20C) included in the third disconnection node notification frame and the MACID (here, MACID of third slave 20C) included in the fourth disconnection node notification frame (step S170).

That is, in a case where first input and output port 11 and second input and output port 12 receive the disconnection node notification frame within a predetermined time, when MACIDs included in the disconnection node notification frames are equal, anomaly type determination part 15 determines that the anomaly that has occurred in communication system 1 is a PHY terminal anomaly.

When anomaly type determination part 15 determines that the anomaly that has occurred in communication system 1 is the PHY terminal anomaly, anomaly position determination part 14 determines that the occurrence position of the PHY terminal anomaly is between third slave 20C and second slave 20B based on the node count value included in the third disconnection node notification frame and the fourth disconnection node notification frame (step S180).

That is, anomaly position determination part 14 specifies the two slaves 20 (here, third slave 20C and second slave 20B) that have transmitted the disconnection node notification frame including the node count value indicating 1 based on the node count value (here, 1) included in the third disconnection node notification frame and the node count value (here, 2) included in the fourth disconnection node notification frame. Then, anomaly position determination part 14 determines that the occurrence position of the PHY terminal anomaly is between the specified two slaves 20 (here, between third slave 20C and second slave 20B).

For example, anomaly position determination part 14 may store the connection order of slave 20 in advance, and specify the two slaves 20 that have transmitted the disconnection note notification frame indicating the node count value indicating 1 from the stored connection order of slave 20 and the node count value.

When anomaly position determination part 14 determines the occurrence position of the anomaly, controller transmission control part 13 switches the operation mode from the first controller operation mode to the second controller operation mode (step S190).

By the second operation performed by communication system 1, the operation mode of controller transmission control part 13 is changed from the first controller operation mode to the second controller operation mode. In addition, by the second operation performed by communication system 1, the operation mode of slave transmission control part 23 of third slave 20C is changed from the first slave operation mode to the second slave operation mode. Furthermore, by the second operation performed by communication system 1, the operation mode of slave transmission control part 23 of second slave 20B is changed from the first slave operation mode to the second slave operation mode. As a result, the transmission path of the normal frame is changed from the main communication path (see Fig. 4) to the first redundant transmission path (see Fig. 6).

As described above, in a case where the transmission path of the normal frame is the main transmission path, when the PHY terminal anomaly where the TX PHY terminal stops functioning occurs, communication system 1 changes the transmission path to the transmission path not using the PHY where the PHY terminal anomaly has occurred, and transmits the normal frame to each slave 20.

Next, in a case where the transmission path of the normal frame is the main transmission path, an operation (hereinafter, also referred to as "third operation") performed by communication system 1 when a PHY terminal anomaly where RX PHY terminal 252 of second slave 20B stops functioning occurs will be described.

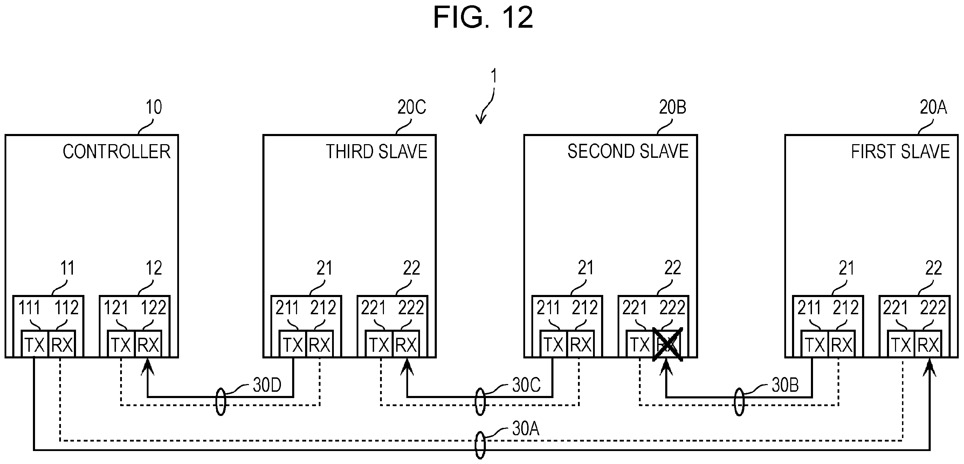

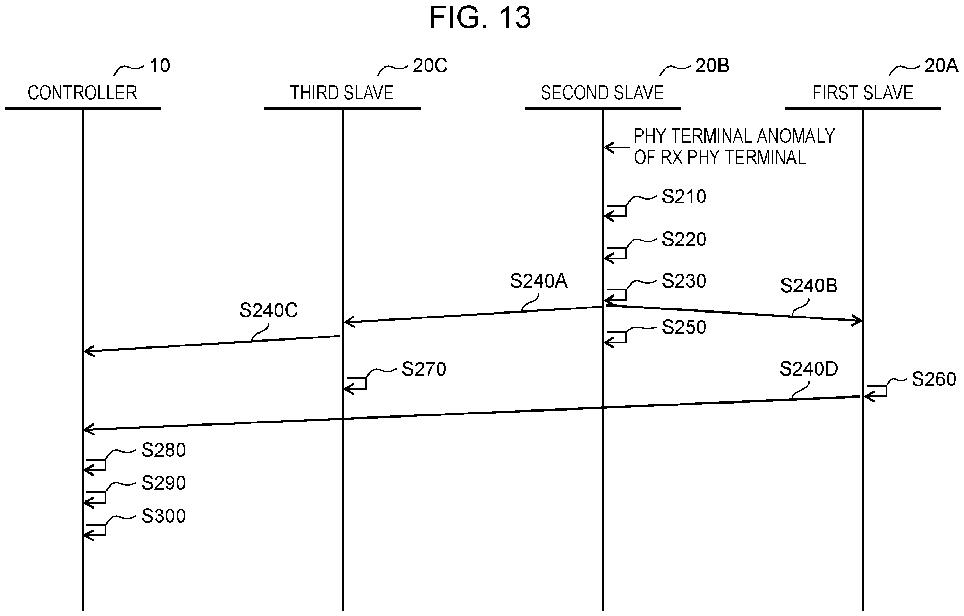

Fig. 12 is a schematic view illustrating a state where the PHY terminal anomaly where RX PHY terminal 252 stops functioning occurs in RX PHY terminal 252 of second slave 20B. Fig. 13 is a sequence diagram of the third operation. Note that here, the PHY terminal anomaly where the RX PHY terminal stops functioning refers to an anomaly where the RX PHY terminal stops functioning due to, for example, a failure of PHY or a failure occurring in a connection path of the RX PHY terminal.

As illustrated in Fig. 13, when the PHY terminal anomaly where RX PHY terminal 252 of second slave 20B stops functioning occurs in RX PHY terminal 252 of second slave 20B, in second slave 20B, PHY 250 no longer detects the link between RX PHY terminal 252 and TX PHY terminal 231 of PHY 230 of first slave 20A of a connection destination. Therefore, in second slave 20B, detector 25 of second slave 20B detects the anomaly related to connection of fourth input and output port 22 (step S210).

When detector 25 of second slave 20B detects the anomaly related to connection of fourth input and output port 22, slave transmission control part 23 of second slave 20B switches the operation mode from the first slave operation mode to the second slave operation mode (step S220).

Then, slave transmission control part 23 of second slave 20B attempts to transmit the disconnection node notification frame from third input and output port 21 and fourth input and output port 22 (step S230).

At this time, slave transmission control part 23 of second slave 20B sets a MACID of second slave 20B including slave transmission control part 23 in the disconnection node notification frame to be a target of an attempt of transmission. In addition, slave transmission control part 23 of second slave 20B attempts to transmit a disconnection node notification frame including the node count value indicating 1 from third input and output port 21, and attempts to transmit a disconnection node notification frame including the node count value indicating 0 from fourth input and output port 22.

As described above, the PHY terminal anomaly where RX PHY terminal 252 of second slave 20B stops functioning occurs in RX PHY terminal 252 of second slave 20B. However, it is possible to transmit a signal from TX PHY terminal 251 of second slave 20B to RX PHY terminal 232 of first slave 20A. Therefore, the attempt to transmit the disconnection node notification frame from fourth input and output port 22 is successful. That is, slave transmission control part 23 of second slave 20B transmits the disconnection node notification frame from fourth input and output port 22 (step S240B). On the other hand, the attempt to transmit the disconnection node notification frame from third input and output port 21 is also successful. That is, slave transmission control part 23 of second slave 20B transmits the disconnection node notification frame from third input and output port 21 (step S240A).

Here, when detector 25 of second slave 20B detects the anomaly related to connection of fourth input and output port 22, the transmission path of the normal frame is the main transmission path. Further, as will be described later, due to occurrence of PHY terminal anomaly where RX PHY terminal 252 of second slave 20B stops functioning in RX PHY terminal 252 of second slave 20B, the transmission path of the normal frame is changed from the main transmission path to a second redundant transmission path (described later). Therefore, in second slave 20B, the connection order of second slave 20B from controller 10 in the transmission path of the normal frame is changed. Here, it seems that the connection order is not apparently changed from 2 to 2. However, in this example, since the connection order before the change and the connection order after the change happen to be equal, it merely seems that the connection order is not apparently changed.

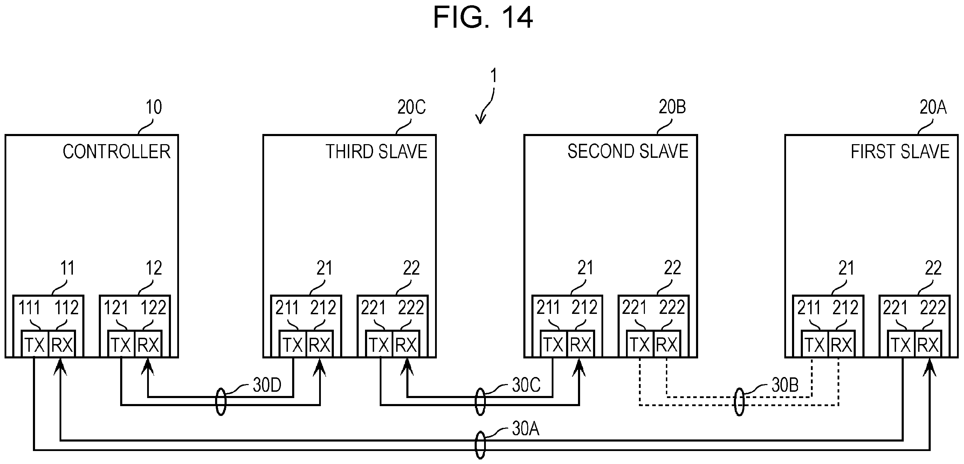

Fig. 14 is a schematic view illustrating the second redundant transmission path. The second redundant transmission path is a transmission path of a normal frame in a case where controller transmission control part 13 operates in the second controller operation mode, slave transmission control parts 23 of first slave 20A and second slave 20B operate in the second slave operation mode, and slave transmission control part 23 of third slave 20C operates in the first slave operation mode.

In Fig. 14, the second redundant transmission path is a path indicated by a solid arrow.

As shown in Fig. 14, the second redundant transmission path includes a first transmission path and a second transmission path. The first transmission path is a first transmission path that returns from controller 10 to controller 10 through first slave 20A, that is, a path turned by first slave 20A. The second transmission path is a path from controller 10 to controller 10 through third slave 20C, second slave 20B, and third slave 20C, that is, a path to be turned by second slave 20B).

Returning again to Fig. 13, the description of the third operation will be continued.

In second slave 20B, synchronization timing calculator 24 calculates the "connection order in transmission path" in (Equation 1) by not changing the pulse timing T of the synchronization timing signal XSYNC even when the transmission path of the normal frame is changed from the main transmission path to the second redundant transmission path. Specifically, synchronization timing calculator 24 calculates a value (here, 3 - 2 + 1 = 2) obtained by adding one to a value obtained by subtracting the connection order from controller 10 (here, the connection order from controller 10 on the main transmission path stored in advance (here, 2)) at the time point of detector 25 detecting the anomaly related to connection from the number of slaves 20 stored in advance (here, 3) as "connection order in transmission path" in (Expression 1).

As described above, synchronization timing calculator 24 updates the method of calculating the pulse timing T of the synchronization timing signal XSYNC by not changing the pulse timing T of the synchronization timing signal XSYNC even when the "connection order in transmission path" is changed (step S250).

In the processing of step S240A, when slave transmission control part 23 of second slave 20B transmits the disconnection node notification frame from third input and output port 21, fourth input and output port 22 of third slave 20C receives the disconnection node notification frame.

When fourth input and output port 22 of third slave 20C receives the disconnection node notification frame, slave transmission control part 23 of third slave 20C transmits, from third input and output port 21, a disconnection node notification frame including the node count value (here, 1 + 1 = 2) obtained by adding one to the node count value (here, 1) included in the disconnection node notification frame (step S240C).

As described above, due to occurrence of PHY terminal anomaly where RX PHY terminal 252 of second slave 20B stops functioning in RX PHY terminal 252 of second slave 20B, the transmission path of the normal frame is changed from the main transmission path to the second redundant transmission path. Therefore, in third slave 20C, the connection order of third slave 20C from controller 10 in the transmission path of the normal frame is changed (here, changed from 3 to 1).

In third slave 20C, synchronization timing calculator 24 calculates the "connection order in transmission path" in (Equation 1) by not changing the pulse timing T of the synchronization timing signal XSYNC even when the transmission path of the normal frame is changed from the main transmission path to the second redundant transmission path. Specifically, synchronization timing calculator 24 calculates a value (here, 3 - 3 + 1 = 1) obtained by adding one to a value obtained by subtracting the connection order from controller 10 (here, the connection order from controller 10 on the main transmission path stored in advance (here, 3)) at the time point of detector 25 detecting the anomaly related to connection from the number of slaves 20 stored in advance (here, 3) as "connection order in transmission path" in (Expression 1).

As described above, synchronization timing calculator 24 updates the method of calculating the pulse timing T of the synchronization timing signal XSYNC by not changing the pulse timing T of the synchronization timing signal XSYNC even when the "connection order in transmission path" is changed (step S270). In other words, when the disconnection node notification frame is received at the input and output port on the side receiving the normal frame (here, fourth input and output port 22), synchronization timing calculator 24 updates the calculation method for calculating the synchronization timing signal XSYNC by not changing the synchronization timing for all the plurality of slaves 20 operating in synchronization when an input and output port other than the input and output port receives the normal frame next time or thereafter.

On the other hand, even when a PHY terminal anomaly where RX PHY terminal 252 of second slave 20B stops functioning occurs in RX PHY terminal 252 of second slave 20B, in first slave 20A, PHY 230 detects the link between RX PHY terminal 232 and TX PHY terminal 251 of PHY 250 of second slave 20B of a connection destination. Therefore, in first slave 20A, detector 25 of first slave 20A does not detect the anomaly related to connection of third input and output port 21.

In the processing of step S240B, when slave transmission control part 23 of second slave 20B transmits the disconnection node notification frame from fourth input and output port 22, third input and output port 21 of first slave 20A receives the disconnection node notification frame.

When third input and output port 21 of first slave 20A receives the disconnection node notification frame, slave transmission control part 23 of first slave 20A transmits, from fourth input and output port 22, a disconnection node notification frame including the node count value (here, 0 + 1 = 1) obtained by adding one to the node count value (here, 0) included in the disconnection node notification frame (step S240D).

Here, in response to receiving the disconnection node notification frame including the node count value indicating 0, slave transmission control part 23 of first slave 20A switches the operation mode from the first slave operation mode to the second slave operation mode (step S260).

In the processing of step S240C, when slave transmission control part 23 of third slave 20C transmits the disconnection node notification frame (hereinafter, also referred to as "fifth disconnection node notification frame") from third input and output port 21, second input and output port 12 receives the fifth disconnection node notification frame.

In the processing of step S240D, when slave transmission control part 23 of first slave 20A transmits the disconnection node notification frame (hereinafter, also referred to as "sixth disconnection node notification frame") from fourth input and output port 22, first input and output port 11 receives the sixth disconnection node notification frame.

When second input and output port 12 receives the fifth disconnection node notification frame, and first input and output port 11 receives the sixth disconnection node notification frame, anomaly type determination part 15 determines that the anomaly that has occurred in communication system 1 is a PHY terminal anomaly based on the MACID (here, MACID of second slave 20B) included in the fifth disconnection node notification frame and the MACID (here, MACID of second slave 20B) included in the sixth disconnection node notification frame (step S280).

When anomaly type determination part 15 determines that the anomaly that has occurred in communication system 1 is the PHY terminal anomaly, anomaly position determination part 14 determines that the occurrence position of the PHY terminal anomaly is between second slave 20B and first slave 20A based on the node count value included in the fifth disconnection node notification frame and the sixth disconnection node notification frame (step S290).

That is, anomaly position determination part 14 specifies the two slaves 20 (here, second slave 20B and first slave 20A) that have transmitted the disconnection node notification frame including the node count value indicating 1 based on the node count value (here, 2) included in the fifth disconnection node notification frame and the node count value (here, 1) included in the sixth disconnection node notification frame. Then, anomaly position determination part 14 determines that the occurrence position of the PHY terminal anomaly is between the specified two slaves 20 (here, between second slave 20B and first slave 20A).

When anomaly position determination part 14 determines the occurrence position of the anomaly, controller transmission control part 13 switches the operation mode from the first controller operation mode to the second controller operation mode (step S300).

By the third operation performed by communication system 1, the operation mode of controller transmission control part 13 is changed from the first controller operation mode to the second controller operation mode. In addition, by the third operation performed by communication system 1, the operation mode of slave transmission control part 23 of second slave 20B is changed from the first slave operation mode to the second slave operation mode. Furthermore, by the third operation performed by communication system 1, the operation mode of slave transmission control part 23 of first slave 20A is changed from the first slave operation mode to the second slave operation mode. As a result, the transmission path of the normal frame is changed from the main communication path (see Fig. 4) to the second redundant transmission path (see Fig. 14).

As described above, in a case where the transmission path of the normal frame is the main transmission path, when the PHY terminal anomaly where the RX PHY terminal stops functioning occurs, communication system 1 changes the transmission path to the transmission path not using the PHY where the PHY terminal anomaly has occurred, and transmits the normal frame to each slave 20.

Next, an operation (hereinafter, also referred to as "fourth operation") performed by communication system 1 when the cable disconnection anomaly of cable 30C is recovered resulting from the occurrence of the cable disconnection anomaly in cable 30C in a case where the transmission path of the normal frame is the first redundant transmission path will be described.

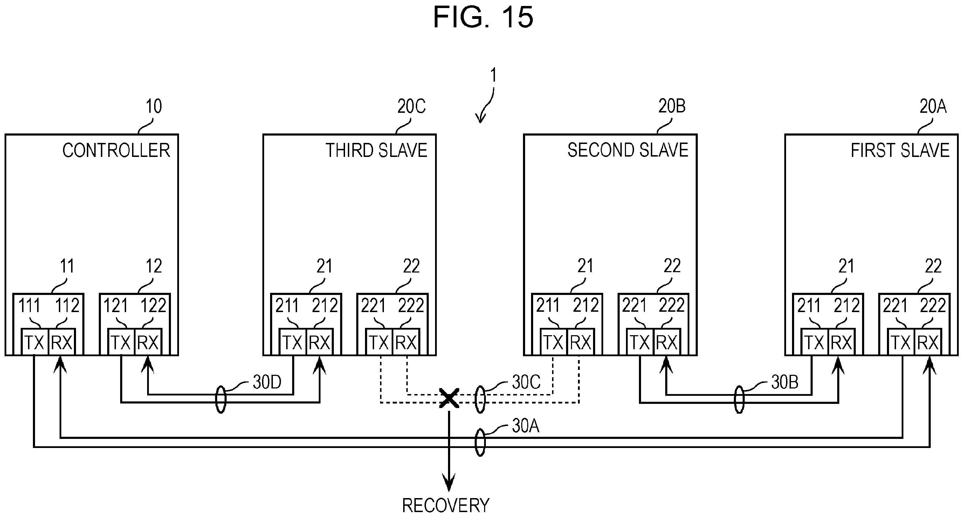

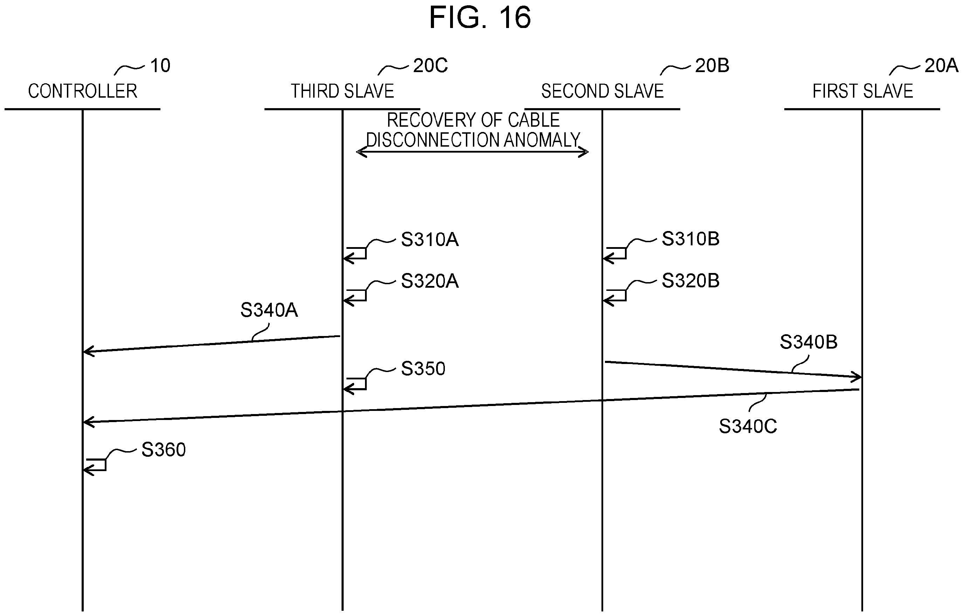

Fig. 15 is a schematic view illustrating a state where the cable disconnection anomaly of cable 30C is recovered. Fig. 16 is a sequence diagram of the fourth operation.

As illustrated in Fig. 16, when the cable disconnection anomaly of cable 30C is recovered, in third slave 20C, PHY 250 detects the link between RX PHY terminal 252 and TX PHY terminal 231 of PHY 230 of second slave 20B of a connection destination. Therefore, in third slave 20C, detector 25 of third slave 20C detects the recovery of the anomaly related to connection of fourth input and output port 22 (step S310A).

When detector 25 of third slave 20C detects the recovery of the anomaly related to connection of fourth input and output port 22, slave transmission control part 23 of third slave 20C switches the operation mode from the second slave operation mode to the first slave operation mode (step S320A).

Then, slave transmission control part 23 of third slave 20C transmits the disconnection node notification frame from third input and output port 21 and fourth input and output port 22 (step S340A).

At this time, slave transmission control part 23 of third slave 20C sets the MACID of third slave 20C including slave transmission control part 23 in the disconnection node notification frame to be transmitted.

Here, when detector 25 of third slave 20C detects the recovery of the anomaly related to connection of fourth input and output port 22, the transmission path of the normal frame is the first redundant transmission path. As will be described later, due to the occurrence of the cable disconnection anomaly of cable 30C being recovered, the transmission path of the normal frame is changed from the first redundant transmission path to the main transmission path. Therefore, in third slave 20C, the connection order of third slave 20C from controller 10 in the transmission path of the normal frame is changed (here, changed from 1 to 3).

The synchronization timing calculator 24 calculates "connection order in transmission path" in (Equation 1) by not changing the pulse timing T of the synchronization timing signal XSYNC even when the transmission path of the normal frame is changed from the first redundant transmission path to the main transmission path. Specifically, synchronization timing calculator 24 calculates the connection order from controller 10 (here, 3) on the main transmission path stored in advance as "connection order on transmission path" in (Equation 1).

As described above, synchronization timing calculator 24 updates the method of calculating the pulse timing T of the synchronization timing signal XSYNC by not changing the pulse timing T of the synchronization timing signal XSYNC even when the "connection order in transmission path" is changed (step S350).

On the other hand, when the cable disconnection anomaly of cable 30C is recovered, in second slave 20B, PHY 230 detects the link between RX PHY terminal 232 and TX PHY terminal 251 of PHY 250 of third slave 20C of a connection destination. Therefore, in second slave 20B, detector 25 of second slave 20B detects the recovery of the anomaly related to connection of third input and output port 21 (step S310B).

When detector 25 of second slave 20B detects the recovery of the anomaly related to connection of third input and output port 21, slave transmission control part 23 of second slave 20B switches the operation mode from the second slave operation mode to the first slave operation mode (step S320B).

Then, slave transmission control part 23 of second slave 20B transmits the disconnection node notification frame from third input and output port 21 and fourth input and output port 22 (step S340B).

At this time, slave transmission control part 23 of second slave 20B includes the MACID of second slave 20B including slave transmission control part 23 in the disconnection node notification frame to be transmitted.

Here, when detector 25 of second slave 20B detects the recovery of the anomaly related to connection of third input and output port 21, the transmission path of the normal frame is the first redundant transmission path. In addition, as will be described later, the transmission path of the normal frame is changed from the first redundant transmission path to the main transmission path due to the recovery of the cable disconnection difference of cable 30C. Therefore, in second slave 20B, the connection order of third slave 20C from controller 10 in the transmission path of the normal frame is not changed. Therefore, synchronization timing calculator 24 of second slave 20B does not update the method of calculating the pulse timing T of the synchronization timing signal XSYNC.

In the process of step S340B, when slave transmission control part 23 of second slave 20B transmits the disconnection node notification frame from fourth input and output port 22, third input and output port 21 of first slave 20A receives the disconnection node notification frame.

When third input and output port 21 of first slave 20A receives the disconnection node notification frame, slave transmission control part 23 of first slave 20A transmits the disconnection node notification frame from fourth input and output port 22 (step S340C).

When second input and output port 12 receives the first disconnection node notification frame, and first input and output port 11 receives the second disconnection node notification frame, controller transmission control part 13 switches the operation mode from the second controller operation mode to the first controller operation mode (step S360).

By the fourth operation performed by communication system 1, the operation mode of controller transmission control part 13 is changed from the second controller operation mode to the first controller operation mode. In addition, by the fourth operation performed by communication system 1, the operation mode of slave transmission control part 23 of third slave 20C is changed from the second slave operation mode to the first slave operation mode. Furthermore, by the fourth operation performed by communication system 1, the operation mode of slave transmission control part 23 of second slave 20B is changed from the second slave operation mode to the first slave operation mode. As a result, the transmission path of the normal frame is changed from the first redundant communication path (see Fig. 6) to the main transmission path (see Fig. 4).

As described above, when the cable disconnection anomaly of cable 30 is recovered resulting from the occurrence of the cable disconnection anomaly in cable 30C, in a case where the transmission path of the normal frame is the first redundant transmission path, communication system 1 changes the transmission path to the main transmission path and transmits the normal frame to each slave 20.

The operation of slave 20 and the operation of controller 10 when the transmission path of the communication frame is the main transmission path in the initial state of communication system 1 will be described below.

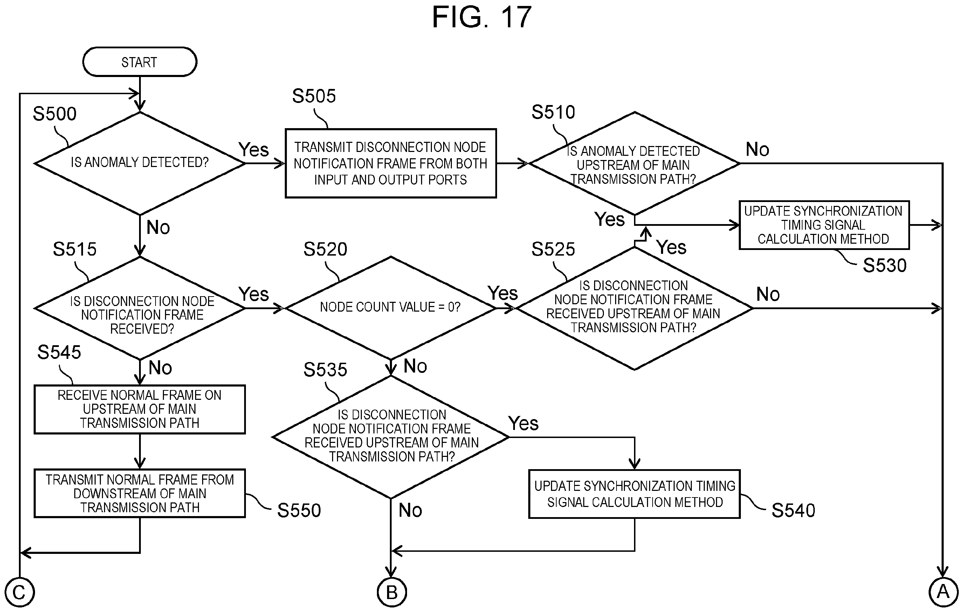

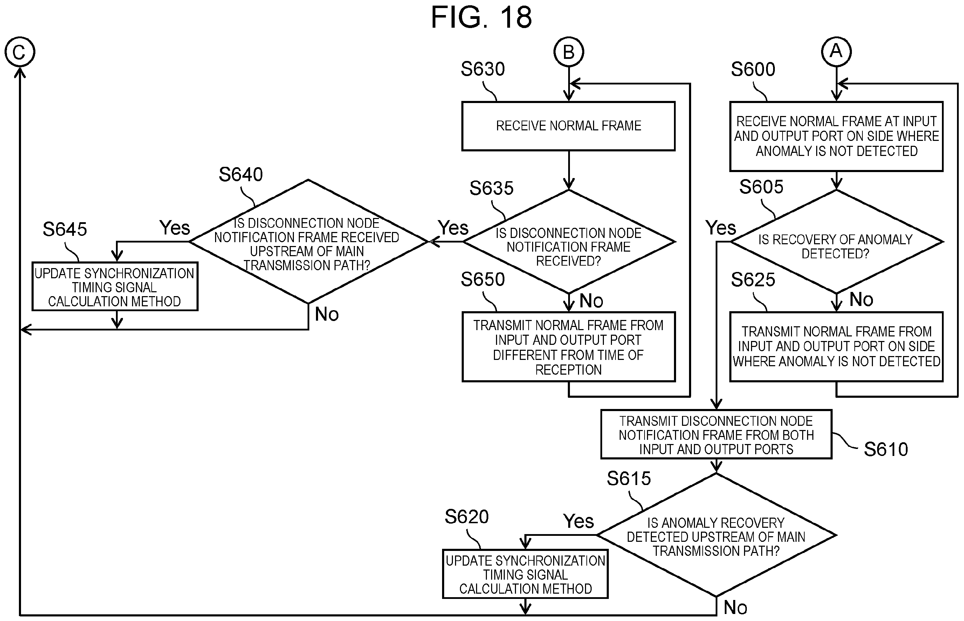

Fig. 17 and Fig. 18 are flowcharts illustrating an example of the operation of slave 20 when the transmission path of the communication frame is the main transmission path in the initial state of communication system 1.

In the initial state of communication system 1, as long as no anomaly related to connection is detected (step S500: No), and as long as no disconnection node notification frame is received (step S515: No), slave 20 repeats the processing of receiving the normal frame on the upstream of the main transmission path (step S545) and transmitting the normal frame from the downstream of the main transmission path (step S550).

When the anomaly related to connection is detected in the processing of step S500 (step S500: Yes), slave 20 transmits the disconnection node notification frame from both the input and output ports of third input and output port 21 and fourth input and output port 22 (step S505).

When the detection of the anomaly related to connection is detection of the anomaly related to connection of the input and output port on the upstream of the main transmission path (step S510: Yes), slave 20 updates the method of calculating the pulse timing T of the synchronization timing signal XSYNC (step S530).

Upon receiving the disconnection node notification frame in the processing of step S515 (step S515: Yes), slave 20 checks whether or not the node count value included in the received disconnection node notification frame is 0 (step S520).

In the processing of step S520, in a case where the node count value is 0 (step S520: Yes), when the reception of the disconnection node notification frame is reception by the input and output port on the upstream of the main transmission path (step S525: Yes), slave 20 updates the method of calculating the pulse timing T of the synchronization timing signal XSYNC (step S530).

In the processing of step S520, in a case where the node count value is not 0 (step S520: No) when the reception of the disconnection node notification frame is reception by the input and output port on the upstream of the main transmission path (step S535: Yes), slave 20 updates the method of calculating the pulse timing T of the synchronization timing signal XSYNC (step S540).

In a case where the detection of the anomaly related to connection is not the detection of the anomaly related to connection of the input and output port on the upstream of the main transmission path in the processing of step S510 (step S510: No), in a case where the reception of the disconnection node notification frame is not the reception by the input and output port on the upstream of the main transmission path in the processing of step S525 (step S525: No), and in a case where the processing of step S530 ends, as long as the recovery of the anomaly related to connection is not detected (step S605: No), slave 20 repeats the processing of receiving the normal frame at the input and output port on the side where the anomaly related to connection is not detected (step S600), and the processing of transmitting the normal frame from the input and output port on the side where the anomaly related to connection is not detected (step S625).

When the recovery of the anomaly related to connection is detected in the processing of step S605 (step S605: Yes), slave 20 transmits the disconnection node notification frame from both the input and output ports of third input and output port 21 and fourth input and output port 22 (step S610).

When the detection of the recovery of the anomaly related to connection is detection of the anomaly related to connection of the input and output port on the upstream of the main transmission path (step S615: Yes), slave 20 updates the method of calculating the pulse timing T of the synchronization timing signal XSYNC (step S620).

In the processing of step S535, in a case where the reception of the disconnection node notification frame is not reception by the input and output port on the upstream of the main transmission path (step S535: No) and in a case where the processing of step S540 ends, slave 20 repeats, upon reception of the normal frame (step SS630), the processing of transmitting the normal frame from the input and output port different from the input and output port at the time of reception (step S650), as long as the disconnection node notification frame is not received (step S635: No).

In the processing of step S635, in a case where the disconnection node notification frame is received (step S635: Yes), when the reception of the disconnection node notification frame is the reception by the input and output port on the upstream of the main transmission path (step S640: Yes), slave 20 updates the method of calculating the pulse timing T of the synchronization timing signal XSYNC (step S645).

In the processing of step S615, in a case where the detection of the recovery of the anomaly related to connection is not the detection of the anomaly related to connection of the input and output port on the upstream of the main transmission path (step S615: No), in a case where the reception of the disconnection node notification frame is not the reception by the input and output port on the upstream of the main transmission path in the processing of step S640 (step S640: No), in a case where the processing of step S620 ends, and in a case where the processing of step S645 ends, slave 20 proceeds to the processing of step S500.

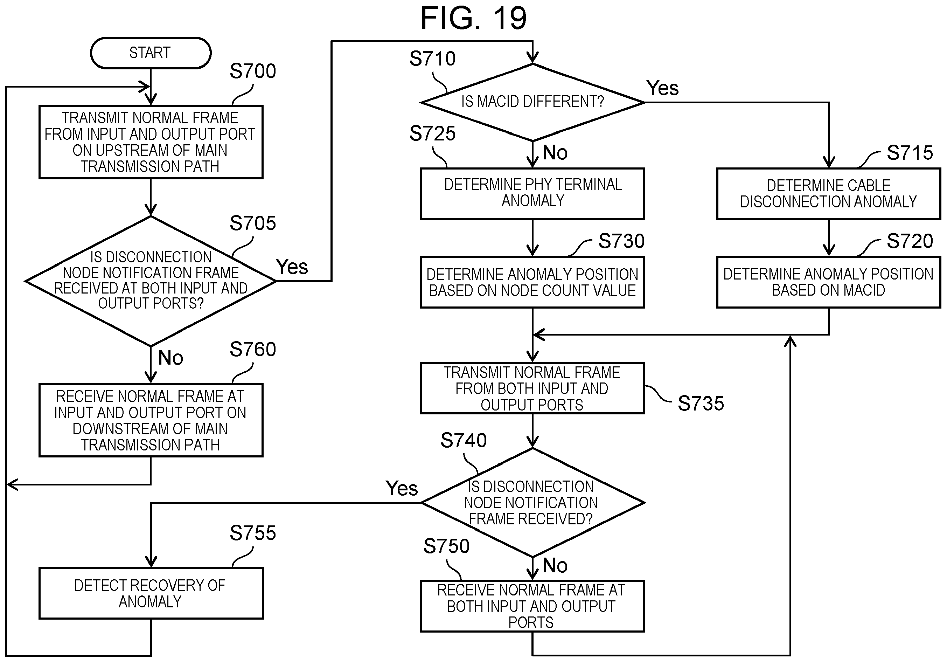

Fig. 19 is a flowchart illustrating an example of the operation of controller 10 when the transmission path of the communication frame is the main transmission path in the initial state of communication system 1.

In the initial state of communication system 1, upon transmission of the normal frame at the input and output port on the upstream of the seed transmission path (step S700), as long as the disconnection node notification frame is not received at both the input and output ports of first input and output port 11 and second input and output port 12 (step S705: No), controller 10 repeats the processing of receiving the normal frame at the input and output port on the downstream of the main transmission path (step S760)

When both the input and output ports receive the disconnection node notification frames in the processing of step S700 (step S705: Yes), controller 10 checks whether or not the MACIDs included in the two received disconnection node notification frames are different from each other (step S710).

In the processing of step S710, when the MACIDs included in the two received disconnection node notification frames are different from each other (step S710: Yes), controller 10 determines that the anomaly that has occurred in communication system 1 is a cable disconnection anomaly (step S715). Then, controller 10 determines that the occurrence position of the cable disconnection anomaly is between the slaves 20 of these MACIDs based on the received MACIDs (step S720).

In the processing of step S710, when the MACIDs included in the received two disconnection node notification frames are not different from each other (step S710: No), controller 10 determines that the anomaly that has occurred in communication system 1 is a PHY terminal anomaly (step S725). Then, based on the node count values included in the two disconnection node notification frames, controller 10 determines that the occurrence position of the PHY anomaly is between the two slaves 20 that have transmitted the disconnection node notification frame including the node count value indicating 1 (step S730).

In a case where the processing of step S720 ends and in a case where the processing of step S730 ends, upon transmission of the normal frame from both the input and output ports of first input and output port 11 and second input and output port 12 (step S735), as long as the disconnection node notification frame is not received (step S740: No), controller 10 repeatedly performs the processing of receiving the normal frame at both the input and output ports of first input and output port 11 and second input and output port 12 (step S750).

When the disconnection node notification frame is received in the processing of step S740 (step S740: Yes), controller 10 detects that the anomaly that has occurred in communication system 1 is recovered (step S755), and the processing proceeds to the processing of step S700.

[1-3. Consideration]

According to communication system 1 including the above configuration, in any one of the slaves 20, when detector 25 detects the anomaly related to connection of third input and output port 21 or the anomaly related to connection of fourth input and output port 22, that is, detects the anomaly related to connection of the network, the disconnection node notification frame is transmitted from corresponding slave 20 to controller 10. As a result, the transmission path of the normal frame in communication system 1 is changed in a relatively short time after the occurrence of the anomaly related to the network connection.

As described above, according to communication system 1, it is possible to shorten the time taken from the occurrence of the anomaly related to the network connection to the change of the transmission path of the frame as compared with the conventional art.

Furthermore, according to communication system 1 including the above configuration, it is possible to determine the type of anomaly related to network connection.

Furthermore, according to communication system 1 including the above configuration, it is possible to determine the occurrence position of the anomaly related to the network connection.

Further, according to communication system 1 including the above configuration, when the anomaly related to the network connection is recovered, the transmission path of the normal frame can be returned to the original path.

(Second exemplary embodiment)

Hereinafter, a communication system according to a second exemplary embodiment configured by changing a part of communication system 1 according to the first exemplary embodiment will be described.

Hereinafter, in the communication system according to the second exemplary embodiment, components similar to the components of communication system 1 according to the first exemplary embodiment will be denoted by the same reference numerals as those already described, detailed description thereof will be omitted, and differences from communication system 1 will be mainly described.

The communication system according to the second exemplary embodiment is configured by changing controller 10 from communication system 1 according to the first exemplary embodiment to controller 10A according to the second exemplary embodiment.

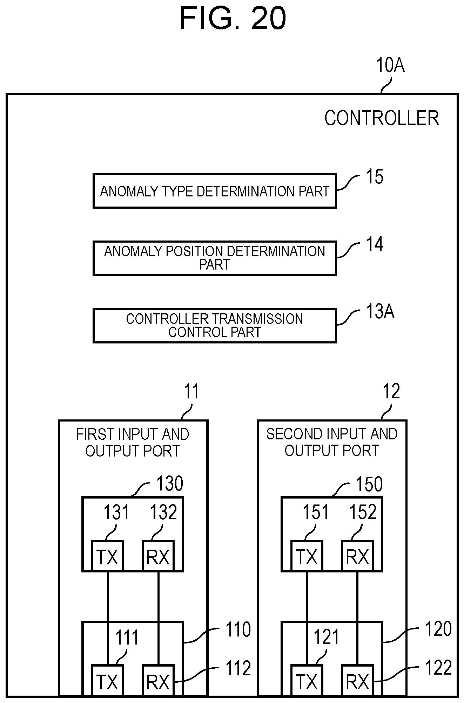

Fig. 20 is a block diagram showing an example of a functional configuration of controller 10A according to the second exemplary embodiment.

As illustrated in Fig. 20, controller 10A is configured by changing controller transmission control part 13 to controller transmission control part 13A in controller 10 according to the first exemplary embodiment.

Controller transmission control part 13A further has the following functions in addition to the functions of controller transmission control part 13.

That is, controller transmission control part 13A receives, from a user of the communication system according to the second exemplary embodiment, a setting as to whether to stop transmission of the normal frame when two or more anomaly occurs in the communication system according to the second exemplary embodiment.

Controller transmission control part 13A stops the transmission of the normal frame in the communication system according to the second exemplary embodiment when the anomaly occurs at two or more positions based on reception of the setting to stop the transmission of the normal frame when two or more anomaly occurs.

Controller transmission control part 13A may receive the setting as to whether or not to stop the transmission of the normal frame by using, for example, an input interface (for example a touch pad, a dip switch, or the like) included in controller 10A.

Further, in the communication system according to the second exemplary embodiment, for example, during operation in the first controller operation mode, when first input and output port 11 and second input and output port 12 each receive a disconnection node notification frame, and when the sum of the node count values included in the disconnection node notification frames is smaller than the number of all the slaves 20 stored in advance, controller transmission control part 13A may determine that the anomaly has occurred at two or more positions.

The user who uses the communication system according to the second exemplary embodiment including the above configuration may set, for example, that controller transmission control part 13A stops the transmission of the normal frame when an anomaly occurs at two or more positions in the communication system of the second exemplary embodiment, in a case where an anomaly occurs due to one or more slaves 20 not receiving the normal frame in the communication system of the second exemplary embodiment.

The user who uses the communication system according to the second exemplary embodiment sets controller transmission control part 13A to not stop the transmission of the normal frame when an anomaly occurs two or more positions in the communication system according to the second exemplary embodiment, for example to realize that one slave 20 of the plurality of slaves 20 included in the communication system according to the second exemplary embodiment is replaced without stopping the operation of the other slaves 20.

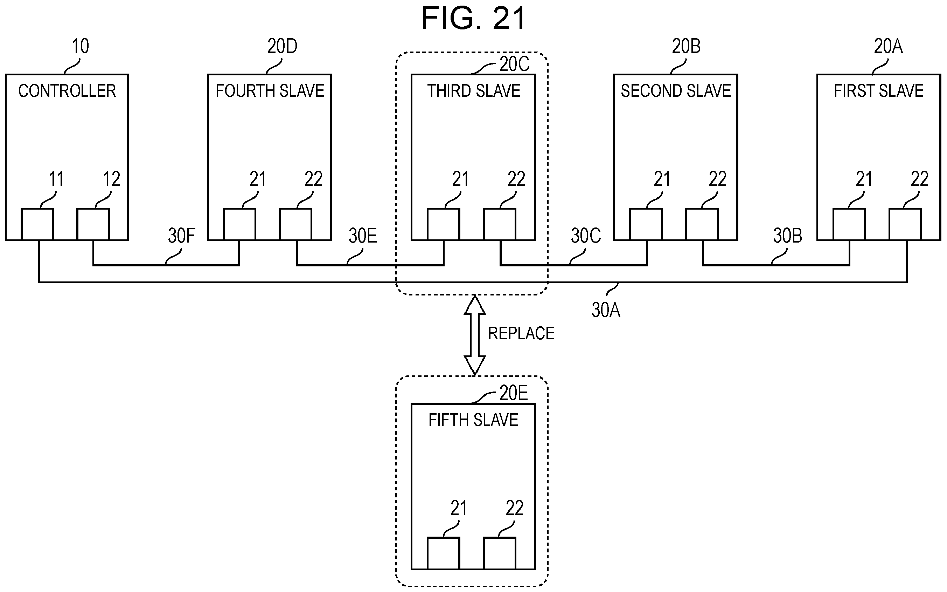

Fig. 21 is a schematic view illustrating a state where the user using the communication system according to the second exemplary embodiment replaces one slave 20 (here, third slave 20C) of the plurality of slaves 20 without stopping the operation of the other slaves 20 (here, first slave 20A, second slave 20B, and fourth slave 20D).

As illustrated in Fig. 21, the user who uses the communication system according to the second exemplary embodiment removes fourth input and output port 22 of third slave 20C from cable 30C, and connects fourth input and output port 22 of fifth slave 20E instead. In addition, third input and output port 21 of third slave 20C is removed from cable 30E, and third input and output port 21 of fourth slave 20D is connected instead. In this way, third slave 20C can be replaced with fifth slave 20E without stopping the operations of first slave 20A, second slave 20B, and fourth slave 20D.

The user who uses the communication system according to the second exemplary embodiment sets controller transmission control part 13A to not stop the transmission of the normal frame when an anomaly occurs at two or more positions in the communication system according to the second exemplary embodiment, for example to realize that one slave 20 of the plurality of slaves 20 included in the communication system according to the second exemplary embodiment is removed without stopping the operation of the other slaves 20.

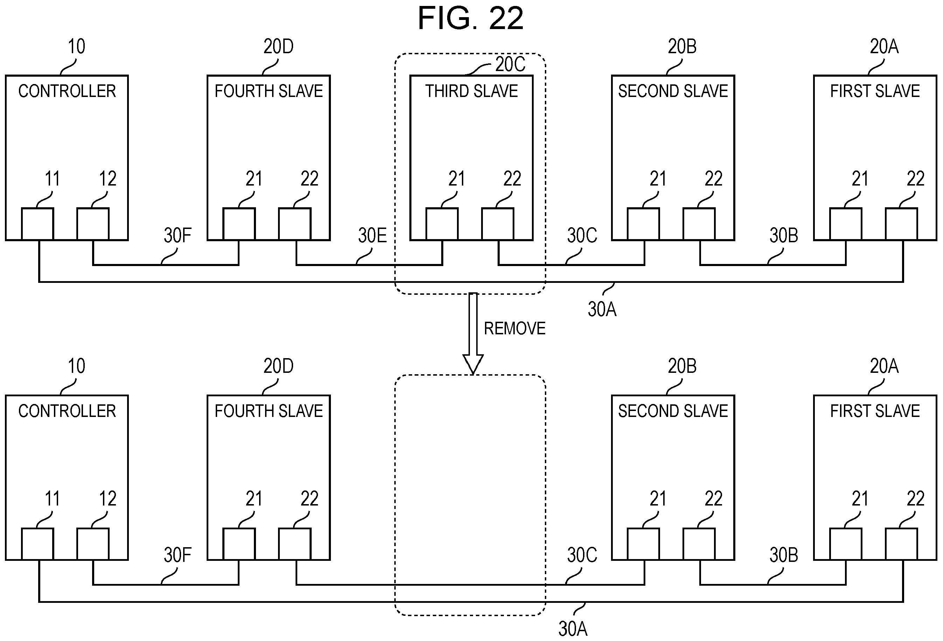

Fig. 22 is a schematic view illustrating a state where the user using the communication system according to the second exemplary embodiment removes one slave 20 (here, third slave 20C) of the plurality of slaves 20 without stopping the operation of the other slaves 20 (here, first slave 20A, second slave 20B, and fourth slave 20D).

As illustrated in Fig. 22, the user who uses the communication system according to the second exemplary embodiment removes fourth input and output port 22 of fourth slave 20D and third input and output port 21 of third slave 20C from cable 30E, removes fourth input and output port 22 of third slave 20C from cable 30C, and connects fourth input and output port 22 of fourth slave 20D instead. In this way, third slave 20C can be removed without stopping the operations of first slave 20A, second slave 20B, and fourth slave 20D.

(Third exemplary embodiment)

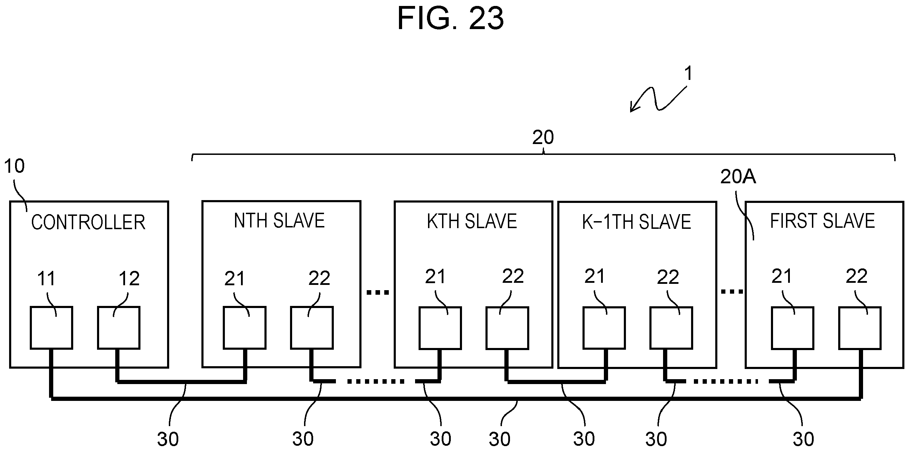

Fig. 23 is a block diagram illustrating an example of a configuration of communication system 1 according to the third exemplary embodiment.

As illustrated in Fig. 23, communication system 1 includes controller 10 including first input and output port 11 and second input and output port 12, and N slaves 20 each including third input and output port 21 and fourth input and output port 22. Herein, n is an integer equal to or greater than two. Fig. 23 illustrates, as the N slaves 20, first slave 20A, K-1th slave 20 (K is an integer, and $3 \le K \le N-1$), Kth slave 20, and Nth slave 20. As in the first exemplary embodiment, first input and output port 11, second input and output port 12, third input and output port 21, and fourth input and output port 22 are connected by cable 30. That is, communication system 1 according to the third exemplary embodiment represents a case of communication system 1 which is generalized to N slaves 20.

Communication system 1 according to the third exemplary embodiment can obtain the same effects as those of communication system 1 according to the first exemplary embodiment.

(Supplementary)

Although the communication system and the like according to one aspect of the present disclosure have been described above based on the first exemplary embodiment and second exemplary embodiment, the present disclosure is not limited to these embodiments. Configurations where various variations conceived by those skilled in the art are applied to the exemplary embodiments, and an aspect formed by combining components in different exemplary embodiments may be included within the scope of one or more aspects of the present disclosure, without departing from the gist of the present disclosure.

INDUSTRIAL APPLICABILITY

The present disclosure is widely applicable to a communication system or the like including a controller and a plurality of slaves.

REFERENCE MARKS IN THE DRAWINGS

1: communication system
10, 10A: controller
11: first input and output port
12: second input and output port
13, 13A: controller transmission control part
14: anomaly position determination part
15: anomaly type determination part
20: slave
20A: first slave
20B: second slave
20C: third slave
20D: fourth slave
20E: fifth slave
21: third input and output port
22: fourth input and output port
23: slave transmission control part
24: synchronization timing calculator
25: detector
30, 30A, 30B, 30C, 30D, 30E: cable
50: normal frame
101, 201: processor

102, 202: memory

110, 120, 210, 220: connector

111, 121, 211, 221: transmission terminal TX

112, 122, 212, 222: reception terminal RX

130, 150, 230, 250: PHY

131, 151, 231, 251: TX PHY terminal

132, 152, 232, 252: RX PHY terminal

**Claims**

1. A communication system comprising:

a controller including a first input and output port, a second input and output port, and a controller transmission control part; and
a first slave to an Nth slave, where N is an integer equal to or greater than 2, each including a third input and output port, a fourth input and output port, a slave transmission control part, and a detector, wherein
the first input and output port is connected to the fourth input and output port of the first slave,
the third input and output port of the Nth slave is connected to the second input and output port,
at any K, where K is an integer equal to or greater than 2 and less than or equal to N, the third input and output port of a K-1th slave is connected to the fourth input and output port of a Kth slave,
the controller transmission control part generates and transmits a normal frame, receives a disconnection node notification frame, and executes a first controller operation mode and a second controller operation mode,
in the first controller operation mode, the normal frame is repeatedly transmitted from the first input and output port,
in the second controller operation mode, the normal frame is repeatedly transmitted from the first input and output port and the second input and output port,
the slave transmission control part transmits and receives the normal frame, generates the disconnection node notification frame, transmits and receives the disconnection node notification frame, and executes a first slave operation mode and a second slave operation mode,
in the first slave operation mode, when one input and output port of the third input and output port and the fourth input and output port receives the normal frame, the normal frame is transmitted from another input and output port of the third input and output port and the fourth input and output port,
in the second slave operation mode, when the one input and output port receives the normal frame, the normal frame is transmitted from the one input and output port,
the detector detects an anomaly related to connection of the third input and output port, and an anomaly related to connection of the fourth input and output port,
the slave transmission control part further performs, when the detector detects the anomaly related to connection of the third input and output port or the anomaly related to connection of the fourth input and output port during operation in the first slave operation mode, switching from the first slave operation mode to the second slave operation mode, generating the disconnection node notification frame indicating that a change in a connection state is detected, and attempting to transmit the disconnection node notification frame from the third input and output port and the fourth input and output port, and, when the one input and output port receives the disconnection node notification frame, transmitting the disconnection node notification frame from the other input and output port, and
the controller transmission control part further performs, when the first input and output port or the second input and output port receives the disconnection node notification frame during operation in the first controller operation mode, switching from the first controller operation mode to the second controller operation mode.

2. The communication system according to Claim 1, wherein

the disconnection node notification frame includes a node count value indicating an integer value of equal to or greater than 0,
during operation in the first slave operation mode, the slave transmission control part performs

(1) when the detector detects an anomaly related to connection of the one input and output port, attempting to transmit the disconnection node notification frame including a node count value indicating 0 from the one input and output port, and attempting to transmit the disconnection node notification frame including a node count value indicating 1 from the other input and output port; and

(2) when the one input and output port receives the disconnection node notification frame including the node count value indicating 0, switching from the first slave operation mode to the second slave operation mode; and

when the one input and output port receives the disconnection node notification frame, transmitting the disconnection node notification frame including a node count value obtained by adding one to a node count value included in the disconnection node notification frame from the other input and output port, and

the controller further includes an anomaly position determination part that specifies an occurrence position of an anomaly based on a node count value included in the disconnection node notification frame received by the first input and output port and a node count value included in the disconnection node notification frame received by the second input and output port, when the first input and output port and the second input and output port receive the disconnection node notification frame.

3. The communication system according to Claim 2, wherein

each of the first slave to the Nth slave further includes a synchronization timing calculator that calculates a synchronization timing signal indicating a synchronization timing for the first slave to the Nth slave operating in synchronization based on a timing for the third input and output port or the fourth input and output port receiving a normal frame, and

the synchronization timing calculator, in a case where an input and output port at a side of receiving the normal frame receives the disconnection node notification frame, and in a case where the detector detects an anomaly related to connection of an input and output port at the side of receiving the normal frame, updates a calculation method for calculating the synchronization timing signal by not changing the synchronization timing when another input and output port than the input and output port at the side of receiving the normal frame receives the normal frame.

4. The communication system according to any one of Claims 1 to 3, wherein

the slave transmission control part sets a MACID of a slave including the slave transmission control part in the disconnection node notification frame to be a target of an attempt of transmission when the detector detects the anomaly related to connection of the third input and output port or the anomaly related to connection of the fourth input and output port during operation in the first slave operation mode, and

the controller further includes an anomaly type determination part that determines a type of an anomaly based on a MACID included in the disconnection node notification frame received by the first input and output port and a MACID included in the disconnection node notification frame received by the second input and output port when the first input and output port and the second input and output port receive the disconnection node notification frame.

5. The communication system according to any one of Claims 1 to 4, wherein

the detector further detects recovery of the anomaly related to connection of the third input and output port and recovery of the anomaly related to connection of the fourth input and output port,

the slave transmission control part switches an operation mode from the second slave operation mode to the first slave operation mode, and transmits the disconnection note notification frame from the third input and output port and the fourth input and output port when the detector detects the recovery of the anomaly related to connection of the third input and output port or the recovery of the anomaly related to connection of the fourth input and output port during operation in the second slave operation mode, and

the controller transmission control part switches from the second controller operation mode to the first controller operation mode when the first input and output port or the second input and output port receives the disconnection node notification frame during operation in the second controller operation mode.

6. A slave comprising:

a first input and output port;
a second input and output port;
a slave transmission control part; and

a detector,
wherein
the slave transmission control part transmits and receives a normal frame, generates a disconnection node notification frame, transmits and receives the disconnection node notification frame, and executes a first slave operation mode and a second slave operation mode,
in the first slave operation mode, when one input and output port of the first input and output port and the second input and output port receives the normal frame, the normal frame is transmitted from another input and output port of the first input and output port and the second input and output port,
in the second slave operation mode, when the one input and output port receives the normal frame, the normal frame is transmitted from the one input and output port,
the detector detects an anomaly related to connection of the first input and output port, and an anomaly related to connection of the first input and output port,
the slave transmission control part further performs, when the detector detects the anomaly related to connection of the first input and output port or the anomaly related to connection of the second input and output port during operation in the first slave operation mode, switching from the first slave operation mode to the second slave operation mode, generating the disconnection node notification frame indicating that a change in a connection state is detected, and attempting to transmit the disconnection node notification frame from the first input and output port and the second input and output port, and, when the one input and output port receives the disconnection node notification frame, transmitting the disconnection node notification frame from the other input and output port.

7. The slave according to Claim 6, wherein

the disconnection node notification frame includes a node count value indicating an integer value of equal to or greater than 0, and
during operation in the first slave operation mode, the slave transmission control part performs

(1) when the detector detects the anomaly related to connection of the first input and output port, attempting to transmit the disconnection node notification frame including a node count value indicating 0 from the one input and output port, and attempting to transmit the disconnection node notification frame including a node count value indicating 1 from the other input and output port; and
(2) when the one input and output port receives the disconnection node notification frame including the node count value indicating 0, switching an operation mode from the first slave operation mode to the second slave operation mode; and when the one input and output port receives the disconnection node notification frame, transmitting the disconnection node notification frame including a node count value obtained by adding one to a node count value included in the disconnection node notification frame from the other input and output port.

8. The slave according to Claim 7, further comprising a synchronization timing calculator that calculates a synchronization timing signal indicating a synchronization timing based on a timing for the first input and output port or the second input and output port receiving a normal frame, wherein the synchronization timing calculator, in a case where an input and output port at a side of receiving the normal frame receives the disconnection node notification frame, and in a case where the detector detects an anomaly related to connection of the input and output port at the side of receiving the normal frame, updates a calculation method for calculating the synchronization timing signal by not changing the synchronization timing when an other input and output port than the input and output port at the side of receiving the normal frame receives the normal frame.

9. The slave according to any one of Claims 6 to 8, wherein the slave transmission control part during operation in the first slave operation mode, when the detector detects the anomaly related to connection of the first input and output port, or the anomaly related to connection of the second input and output port, the slave transmission control part sets a MACID of a slave including the slave transmission control part in the disconnection node notification frame to be a target of an attempt of transmission.

10. The slave according to any one of Claims 6 to 9, wherein

the detector further detects recovery of the anomaly related to connection of the first input and output port and recovery of the anomaly related to connection of the second input and output port, and
when the detector detects the recovery of the anomaly related to connection of the first input and output port or the recovery of the anomaly related to connection of the second input and output port, during operation in the second slave operation mode, the slave transmission control part switches from the second slave operation mode to the first slave operation mode, and transmits the disconnection node notification frame from the first input and output port and the second input and output port.

11. A controller comprising:

a first input and output port;
a second input and output port; and
a controller transmission control part,
wherein
the controller transmission control part generates and transmits a normal frame, receives a disconnection node notification frame, and executes a first controller operation mode and a second controller operation mode,
the controller transmission control part performs, in the first controller operation mode, repeatedly transmitting the normal frame from the first input and output port, in the second controller operation mode, repeatedly transmitting the normal frame from the first input and output port and the second input and output port, and when the first input and output port or the second input and output port receives a disconnection node notification frame indicating a change in a connection state during operation in the first controller operation mode, switching from the first controller operation mode to the second controller operation.

12. The controller according to Claim 11, wherein

the disconnection node notification frame includes a MACID, and
the controller further includes an anomaly type determination part that determines a type of an anomaly based on a MACID included in the disconnection node notification frame received by the first input and output port and a MACID included in the disconnection node notification frame received by the second input and output port when the first input and output port and the second input and output port receive the disconnection node notification frame.

13. The controller according to Claim 11 or 12, wherein an operation mode is switched from the second controller operation mode to the first controller operation mode when the first input and output port or the second input and output port receives a disconnection node notification frame during operation in the second controller operation mode.

14. A communication method performed by a communication system, the communication system including a controller including a first input and output port, a second input and output port, and a controller transmission control part; and a first slave to an Nth slave, where N is an integer equal to or greater than 2, each including a third input and output port, a fourth input and output port, a slave transmission control part, and a detector, wherein

the first input and output port is connected to the fourth input and output port of the first slave, the third input and output port of the Nth slave is connected to the second input and output port, at any K, where K is an integer equal to or greater than 2 and less than or equal to N, the third input and output port of the K-1th slave is connected to the fourth input and output port of the Kth slave,
the controller transmission control part generates and transmits a normal frame, receives a disconnection node notification frame, and executes a first controller operation mode and a second controller operation mode,
in the first controller operation mode, the normal frame is repeatedly transmitted from the first input and output port,
in the second controller operation mode, the normal frame is repeatedly transmitted from the first input and output port and the second input and output port,
in each of the first slave to the Nth slave, the slave transmission control part performs
in the first slave operation mode, when one input and output port of the third input and output port and the fourth input and output port receives the normal frame, transmitting the normal frame from another input and output port of the third input and output port and the fourth input and output port, and
in the second slave operation mode, when the one input and output port receives the normal frame, transmitting the normal frame from the one input and output port,
the detector detects an anomaly related to connection of the third input and output port, and an anomaly related to connection of the fourth input and output port,
the slave transmission control part further performs, when the detector detects the anomaly related to connection

**EP 4 297 363 A1**

of the third input and output port or the anomaly related to connection of the fourth input and output port during operation in the first slave operation mode, switching from the first slave operation mode to the second slave operation mode, generating the disconnection node notification frame indicating that a change in a connection state is detected, and attempting to transmit the disconnection node notification frame from the third input and output port and the fourth input and output port, and, when the one input and output port receives the disconnection node notification frame, transmitting the disconnection node notification frame from the other input and output port, and

the controller transmission control part switches from the first controller operation mode to the second controller operation mode when the first input and output port or the second input and output port receives the disconnection node notification frame during operation in the first controller operation mode.

FIG. 1

# FIG. 2

10

CONTROLLER

ANOMALY TYPE DETERMINATION PART — 15

ANOMALY POSITION DETERMINATION PART — 14

CONTROLLER TRANSMISSION CONTROL PART — 13

11

FIRST INPUT AND OUTPUT PORT

130

131  132

TX  RX

111  110

112

TX  RX

12

SECOND INPUT AND OUTPUT PORT

150

151  152

TX  RX

121  120

122

TX  RX

# FIG. 3

20

SLAVE

| SYNCHRONIZATION TIMING CALCULATOR | 24 |

| SLAVE TRANSMISSION CONTROL PART | 23 |

| DETECTOR | 25 |

21

THIRD INPUT AND OUTPUT PORT

230

231 232

TX RX

211 210

212

TX RX

22

FOURTH INPUT AND OUTPUT PORT

250

251 252

TX RX

221 220

222

TX RX

## FIG. 4

EP 4 297 363 A1

# FIG. 5

CONTROLLER 10

TX122 | Header | #0 | #0 | ... | #Z | #Z | Result | CRC | 50

FIRST SLAVE 20A

RX222 | Header | #0 | #0 | ... | #Z | #Z | Result | CRC | 50

TX211 | Header | #0 | #0 | ... | #Z | #Z | Result | CRC | 50

XSYNC

SECOND SLAVE 20B

RX222 | Header | #0 | #0 | ... | #Z | #Z | Result | CRC | 50

TX211 | Header | #0 | #0 | ... | #Z | #Z | Result | CRC | 50

XSYNC

THIRD SLAVE 20C

RX222 | Header | #0 | #0 | ... | #Z | #Z | Result | CRC | 50

TX211 | Header | #0 | #0 | ... | #Z | #Z | Result | CRC | 50

XSYNC

t

EP 4 297 363 A1

# FIG. 6

# FIG. 7

CONTROLLER 10

TX111  | Header | #0 | #0 | ... | #Z | #Z | Result | CRC | ⟋ 50

TX121  | Header | #0 | #0 | ... | #Z | #Z | Result | CRC | ⟋ 50

FIRST SLAVE 20A

RX122  | Header | #0 | #0 | ... | #Z | #Z | Result | CRC | ⟋ 50

TX211  | Header | #0 | #0 | ... | #Z | #Z | Result | CRC | ⟋ 50

XSYNC

SECOND SLAVE 20B

RX222  | Header | #0 | #0 | ... | #Z | #Z | Result | CRC | ⟋ 50

TX211  | Header | #0 | #0 | ... | #Z | #Z | Result | CRC | ⟋ 50

XSYNC

THIRD SLAVE 20C

RX222  | Header | #0 | #0 | ... | #Z | #Z | Result | CRC | ⟋ 50

TX211  | Header | #0 | #0 | ... | #Z | #Z | Result | CRC | ⟋ 50

XSYNC

→ t

# FIG. 8

# FIG. 9

CONTROLLER ~10  THIRD SLAVE ~20C  SECOND SLAVE ~20B  FIRST SLAVE ~20A

CABLE DISCONNECTION
ANOMALY OCCURRENCE

S10A  S10B
S20A  S20B
S40A  S30A  S30B  S40B
S50
S40C
S60
S70
S80

EP 4 297 363 A1

FIG. 10

# FIG. 11

FIG. 12

# FIG. 13

EP 4 297 363 A1

FIG. 14

FIG. 15

# FIG. 16

EP 4 297 363 A1

# FIG. 17

START

**S500** IS ANOMALY DETECTED?
— Yes → **S505** TRANSMIT DISCONNECTION NODE NOTIFICATION FRAME FROM BOTH INPUT AND OUTPUT PORTS
→ **S510** IS ANOMALY DETECTED UPSTREAM OF MAIN TRANSMISSION PATH? — No → (A)
— Yes → **S530** UPDATE SYNCHRONIZATION TIMING SIGNAL CALCULATION METHOD

**S500** — No ↓

**S515** IS DISCONNECTION NODE NOTIFICATION FRAME RECEIVED?
— Yes → **S520** NODE COUNT VALUE = 0?
— Yes → **S525** IS DISCONNECTION NODE NOTIFICATION FRAME RECEIVED UPSTREAM OF MAIN TRANSMISSION PATH? — No → (A)
— Yes → S530

**S515** — No ↓

**S545** RECEIVE NORMAL FRAME ON UPSTREAM OF MAIN TRANSMISSION PATH
↓
**S550** TRANSMIT NORMAL FRAME FROM DOWNSTREAM OF MAIN TRANSMISSION PATH
→ (C)

**S520** — No ↓

**S535** IS DISCONNECTION NODE NOTIFICATION FRAME RECEIVED UPSTREAM OF MAIN TRANSMISSION PATH?
— Yes → **S540** UPDATE SYNCHRONIZATION TIMING SIGNAL CALCULATION METHOD → (B)
— No → (B)

EP 4 297 363 A1

# FIG. 18

EP 4 297 363 A1

# FIG. 19

START

TRANSMIT NORMAL FRAME FROM INPUT AND OUTPUT PORT ON UPSTREAM OF MAIN TRANSMISSION PATH — S700

IS DISCONNECTION NODE NOTIFICATION FRAME RECEIVED AT BOTH INPUT AND OUTPUT PORTS? — S705

Yes →

No ↓

RECEIVE NORMAL FRAME AT INPUT AND OUTPUT PORT ON DOWNSTREAM OF MAIN TRANSMISSION PATH — S760

DETECT RECOVERY OF ANOMALY — S755

IS MACID DIFFERENT? — S710

Yes → DETERMINE CABLE DISCONNECTION ANOMALY — S715

DETERMINE ANOMALY POSITION BASED ON MACID — S720

No ↓

DETERMINE PHY TERMINAL ANOMALY — S725

DETERMINE ANOMALY POSITION BASED ON NODE COUNT VALUE — S730

TRANSMIT NORMAL FRAME FROM BOTH INPUT AND OUTPUT PORTS — S735

IS DISCONNECTION NODE NOTIFICATION FRAME RECEIVED? — S740

Yes →

No ↓

RECEIVE NORMAL FRAME AT BOTH INPUT AND OUTPUT PORTS — S750

# FIG. 20

10A

CONTROLLER

| ANOMALY TYPE DETERMINATION PART | 15 |

| ANOMALY POSITION DETERMINATION PART | 14 |

| CONTROLLER TRANSMISSION CONTROL PART | 13A |

11

FIRST INPUT AND OUTPUT PORT

130

131   132

TX   RX

111   110

TX   RX   112

12

SECOND INPUT AND OUTPUT PORT

150

151   152

TX   RX

121   120

TX   RX   122

# FIG. 21

# FIG. 22

EP 4 297 363 A1

# FIG. 23

EP 4 297 363 A1

## INTERNATIONAL SEARCH REPORT

| International application No. |
| --- |
| **PCT/JP2021/046949** |

**A. CLASSIFICATION OF SUBJECT MATTER**

*H04L 43/0811*(2022.01)i; *H04L 12/42*(2006.01)i; *H04L 12/437*(2006.01)i; *H04L 25/02*(2006.01)i
FI: H04L43/0811; H04L12/42 Z; H04L12/437 B; H04L12/437 S; H04L25/02 301C

According to International Patent Classification (IPC) or to both national classification and IPC

**B. FIELDS SEARCHED**

Minimum documentation searched (classification system followed by classification symbols)

H04L43/0811; H04L12/42; H04L12/437; H04L25/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 1993-268236 A (MATSUSHITA ELECTRIC INDUSTRIAL CO., LTD.) 15 October 1993 (1993-10-15)<br>entire text, all drawings | 1-14 |
| A | JP 2005-333505 A (MITSUBISHI ELECTRIC CORP) 02 December 2005 (2005-12-02)<br>entire text, all drawings | 1-14 |

☐ Further documents are listed in the continuation of Box C.  ☑ See patent family annex.

\* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| **08 February 2022** | **01 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/046949**

| Patent document cited in search report | | | Publication date (day/month/year) | Patent family member(s) | Publication date (day/month/year) |
|---|---|---|---|---|---|
| JP | 1993-268236 | A | 15 October 1993 | (Family: none) | |
| JP | 2005-333505 | A | 02 December 2005 | (Family: none) | |

Form PCT/ISA/210 (patent family annex) (January 2015)

**REFERENCES CITED IN THE DESCRIPTION**

**Patent documents cited in the description**

- WO 2010143305 A